# EUROPEAN PATENT APPLICATION

(11) **EP 1 887 735 A2**
(43) Date of publication of application: **13.02.2008**
(21) Application number: 07121554.5
(22) Date of filing: 09.01.2004
(51) Int. Cl.: H04L 12/28, H04L 12/413

(54) **Method for transmitting data stream via wireless medium across a wireless network and a wireless network**

(30) Priority: 10.01.2003 JP 2003004498
(62) Divisional of application: 04701107.7
(71) Applicant: MATSUSHITA ELECTRIC INDUSTRIAL CO., LTD, Kadoma-shi, Osaka 571-8501 (JP)
(72) Inventor: Harada, Yasuo c/o Matsushita Electric Industrial Co., Ltd., Osaka 540-6207 (JP); Ando, Kazuhiro c/o Matsushita Elect. Ind. Co. Ltd., Osaka 540-6207 (JP); Apichaichalermwongse, Chalermphol c/o Matsushita Elec. Ind. Co. Ltd., Osaka 540-6207 (JP); Tan, Pek Yew c/o Panasonic Singapore Laboratories Pte. Ltd., 534415, Singapore (SG); Lim, Wei Lih c/o Panasonic Singapore Laboratories Pte. Ltd., 534415, Singapore (SG); Malik, Rahul c/o Panasonic Singapore Laboratories Pte. Ltd., 534415, Singapore (SG)
(74) Representative: Eisenführ, Speiser & Partner

(57) **Abstract**

It is provided a method for transmitting data stream via wireless medium for contention based medium access across a wireless network having a plurality of stations and an access point communicating to the stations via wireless medium. The method includes: (i) transmitting data stream from the station according to prescheduled wireless medium occupancy reservation for the station within only prescheduled medium occupancy period of a selective contention period; (ii) performing a contention between the stations for wireless medium occupancy for a contention successful station to transmit data stream within only contention medium occupancy period of the selective contention period; (iii) transmitting data stream from the contention successful station after the contention; and (iv) prescheduling a wireless medium occupancy reservation for the contention successful station to transmit within a prescheduled medium occupancy period of next selective contention period.

## Description

### TECHNICAL FIELD

This invention is to equip a network device with Quality of Service (QoS) awareness system process to serve traffic streams in a coordinated manner. This invention also increases QoS awareness and throughput efficiency of traffic streams transmission by coordinating stream transmission and reduce the number of collision for contention based medium access mechanism.

### BACKGROUND ART

In prior art, the timing to obtain transmission permit for stream transmission that is not being coordinated are not base on the stream requirement. It will try to request for transmission permit without any other further consideration if the queue is not empty. Furthermore, the permit is granted based on priority as described in Draft Supplement to International Standard ISO/IEC 8802-11 : 1999 : ANSI/IEEE Std 882.11, 1999 Edition -" Part 11: Wireless LAN Medium Access Control (MAC) and (PHY) Specifications (draft 3.0) and some random periods as described in International Standard ISO/IEC 8802-11 1999 : ANSI/IEEE Std 802.11, 1999 Edition - " Part 11: Wireless LAN Medium Access Control (MAC) and (PHY) Specifications.

Based on IEEE802.11e Enhanced Distributed Coordination Function (EDCF), the contention for each continuous packets delivery within a particular time frame causes non-deterministic data packets arrival at the receiver end. Such occurrence of contention is rather prevalent if there is more than one stream of the same priority are admitted into the Basic Service Set (BSS). Contention may occur during each time the station of the same priority content for medium dedication time. The number of contentions depends on the amount of bandwidth allotted to stations and the number of station within the BSS based on the maximum available bandwidth within BSS. Furthermore, the QoS requirement of the transmission streams is jeopardized when the timing to request for transmission permit is not coordinated and guarded.

Frequent request for short medium occupancy period leads to higher collisions and overheads. This is especially true when the wireless stations do not aggregate these short medium occupancy period requests needed for delivering data streams from one wireless device to another.

Complicated LSI implementation is required at the network device in order to preserve the QoS requirement of individual data stream where each transmission permit dedication is for plural number of data streams transmission.

### DISCLOSURE OF INVENTION

In accordance with one aspect of the present invention, there is a method for transmitting data stream via wireless medium for contention based medium access across a wireless network having a plurality of stations and an access point communicating to said stations via wireless medium. The method includes:
(i) performing a contention between the stations for wireless medium occupancy for a station to transmit data stream at a selective contention period;
(ii) transmitting data stream from the contention successful station after the contention.

The selective contention period is divided into two distinct period as:
(a) contention medium occupancy period at which the stations contend for wireless medium occupancy for a station to transmit data stream; and
(b) prescheduled medium occupancy period at which a wireless medium occupancy reservation for a contention successful station is prescheduled,

In another aspect of the present invention, there is a method for transmitting data stream via wireless medium for contention based medium access across a wireless network having a plurality of stations and an access point communicating to said stations via wireless medium. The method includes:
(i) transmitting data stream from the station according to prescheduled wireless medium occupancy reservation for the station within prescheduled medium occupancy period of a selective contention period;
(ii) performing a contention between the stations for wireless medium occupancy for a contention successful station to transmit data stream within only contention medium occupancy period of the contention selective period;
(iii) transmitting data stream from the contention successful station after the contention; and
(iv) prescheduling a wireless medium occupancy reservation for the contention successful station to transmit within a prescheduled medium occupancy period of next selective contention period.

Preferably, the access point transmit a beacon signal including an information about start period of the contention medium occupancy period to each station so that selective contention between the stations can be performed.

It is noted that the beacon signal, the prescheduled medium occupancy period, and the contention medium occupancy period may be provided in turn in the selective contention period.

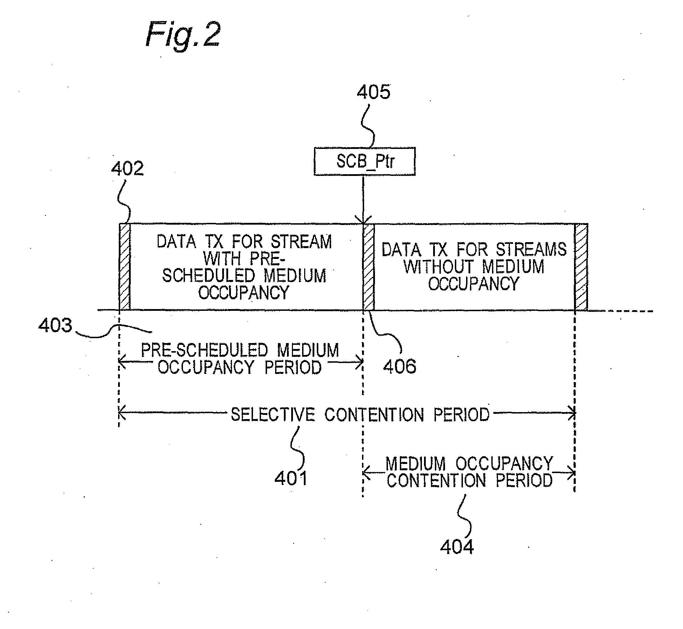

In another aspect of the present invention, when a station is successful for a contention at the contention medium occupancy period of the selective contention period, a wireless medium occupancy reservation having a duration period for the contention successful station is prescheduled within a prescheduled medium occupancy period of next selective contention period. Then start period of a contention medium occupancy period of next selective contention period is moved forward from the start period of the contention medium occupancy period of the selective contention period by the duration period. It is noted that the start period of a contention medium occupancy period may be indicated by Selective Contention Backoff Pointer (SCB_Ptr) as shown in Figs. 2, 4, 12A, 13A, 15A, 17A, 19A.

In a further aspect of the present invention, when a first station is successful for a first contention at the contention medium occupancy period of the selective contention period, subsequently a second station is successful for a second contention after the first contention, a first medium occupancy reservation having a first duration period for the first station is prescheduled within a prescheduled medium occupancy period of next selective contention period, subsequently a second medium occupancy reservation having a second duration period for the second station is prescheduled after the first medium occupancy reservation within the prescheduled medium occupancy period of next selective contention period. Then start period of a contention medium occupancy period of next selective contention period is moved forward from the start period of the contention medium occupancy period of the selective contention period by sum of the first duration period and the second duration period.

Preferably, the start period and the duration period of transmissions from the first and second stations according to the scheduled wireless medium occupancy reservation may be recorded in both the first and the second stations.

In a further aspect of the present invention, the station monitors condition of the wireless medium occupancy in the selective contention period, and records the condition, then transmission timing is determined according to the condition of the wireless medium occupancy recorded.

In a further aspect of the present invention, when the access point receives null packet transmitted at the transmission timing according to prescheduled wireless medium occupancy reservation having a duration period for the station, the prescheduled wireless medium occupancy reservation will be cancelled, then start period of the contention medium occupancy period of next selective contention period will be moved back by the duration period.

The beacon signal may include information with respect to:
(i) start period and end period of selective contention period having the contention medium occupancy period and the prescheduled medium occupancy period of the selective contention period; and
(ii) duration period of the selective contention period.

Furthermore, the beacon signal may include information with respect to start period and duration period of prescheduled wireless medium occupancy reservation within the prescheduled medium occupancy period.

In a still further aspect of the present invention, the station transmits data stream having last packet including reservation parameter for wireless medium occupancy reservation having a duration period in prescheduled medium occupancy period of next selective contention period. In addition, the access point receives the reservation parameter included in last packet, wireless medium occupancy reservation for the station will be prescheduled in prescheduled medium occupancy period of next selective contention period, then the start period of the contention medium occupancy period will be moved forward by the duration period.

In a yet further aspect of the present invention, there is a wireless network system comprising a plurality of stations and an access point communicating with the stations via wireless medium.

The access point includes:
a medium recorder unit which records:
   (i) start and end period of contention medium occupancy period in which stations contend for wireless medium occupancy for a station to transmit data stream; and
   (ii) start and end period of prescheduled medium occupancy period in which wireless medium occupancy is prescheduled, and transmission is performed according to the prescheduled wireless medium occupancy;
a controller unit which preschedules wireless medium occupancy reservation having a duration period for contention successful station in prescheduled medium occupancy period, and moves forward the start period of contention medium occupancy period of next selective contention period by the duration period;
a transmitter unit which transmits a beacon signal including information for start period of the contention medium occupancy period to the stations; and
a receiver unit which receives data stream transmitted from the station.

The contention medium occupancy period and the prescheduled medium occupancy period are included in the selective contention period.

In the access point, when the receiver unit receives a null packet transmitted at the transmission timing according to prescheduled wireless medium occupancy reservation having a duration period for the station, the prescheduled wireless medium occupancy reservation will be cancelled, then start period of the contention medium occupancy period of next selective contention period will be moved forward by the duration period.

The at least one station includes:
a receiver unit which receives the beacon signal including information of the start period of the contention medium occupancy period transmitted from the access point via the wireless medium;
a transmitter unit which transmits data stream via the wireless medium;
a medium recorder unit which records medium record; and
a controller unit which extracts the information of the start period of the contention medium occupancy period from the beacon signal, and monitors condition of wireless medium occupancy at every monitoring period among the start period and the end period of the contention medium occupancy period, then instructs the transmitter to transmit data stream when the controller unit confirms that wireless medium is not occupied.

In another station, when the station is successful for a contention at the contention medium occupancy period of the selective contention period, and acquires a wireless medium occupancy reservation having a duration period for the contention successful station, then the station may extract information of start period of the contention medium occupancy period of next selective contention period, and begins to transmit data stream at a time before the start period of the contention medium occupancy period by the duration period.

In a further station, the medium recorder unit may record the medium record including condition of wireless medium occupancy in both the contention medium occupancy period and the prescheduled medium occupancy period of the selective contention period, and the controller unit can also calculate transmission timing at which the station transmits data stream in the prescheduled medium occupancy period according to the transmission record.

In a still further aspect, when first and second stations are prescheduled respectively within the next prescheduled medium occupancy period, and the first station's transmitter unit transmits a null packet which is a kind of broadcasting packet sent to all stations in order to release its own prescheduled wireless medium occupancy, and the second station's receiver unit receives the null packet from the first station, then the controller unit of the second station realizes that the prescheduled wireless medium occupancy reservation for the first station is cancelled, and rearranges its transmission order of the second station within the next prescheduled medium occupancy period by using the medium record recorded by the medium recorder unit of the second station.

In the event, application data streams gain access to the wireless medium using contention based mechanism at the wireless medium control layer, it is possible to selective choose the contention period for data stream this is admitted into the wireless network. Selective contention for all wireless station can begins after detecting the selective contention start indicator from the central controller of the wireless network. This indicator is broadcast periodically at the beginning of the selective contention period. The stations in the wireless network controlled by the central controlled in a distributed manner updates the transmission time of other stations as well as it's own. With this transmission records, the stations can determine the optimal time to contend for wireless medium and thereby reducing the contention time within the wireless network. The stations can reserve wireless medium by contending using any contention methods in current selective contention period and automatically reserve for the same medium occupancy time in the next selective contention period. Deletion wireless medium reservation is performed by simply not transmitting data packets at scheduled transmission time. All transmission and non-transmission period at pre-scheduled time will be automatically updated in the transmission records maintained by individual stations within the wireless network.

### Effects of the Invention

By applying the present invention, a network device is become more QoS aware. The number of transmission permit required serving QoS streams are reduced. Contending of Wireless Medium is more scheduled and thus reducing the number of contention or collision as the wireless medium is shared by plural number of wireless station within a wireless network administered by a central controller. For a uninterrupted data stream transmission, the present invention allow contention based wireless medium to reserve for bandwidth thereby reducing the number of contention for reserved bandwidth to zero. Zero contention provides a constant transmission and reception behaviour at the transmitting and the receiving station respectively. Having a zero or extreme small contention period, the bad characteristic of stream arrival behaviour such as high jitter rate can be removed and allowing less complex interface and software control mechanism implementation in the layer above medium access controller.

### BRIEF DESCRIPTION OF DRAWINGS

The present invention will become readily understood from the following description of preferred embodiments thereof made with reference to the accompanying drawings, in which like parts are designated by like reference numeral, and in which:
Fig. 1 shows a High Level Message Sequence Chart for Wireless Stations and Central Controller operating during a Selective Contention period;
Fig. 2 is a timing diagram of a typical Selective Contention Period;
Fig. 3 is a flowchart for updating Transmission Records;
Fig. 4 shows Central Controller in a Selective Contention Period;
Fig. 5 shows Operations of Transmission Record by Wireless Station;
Fig. 6 is a schematic view of the wireless network of the present invention;
Fig. 7A is a schematic view of the access point of the network;
Fig. 7B is a schematic view of the station of the network;
Fig. 8 is a flowchart for transmission via wireless medium across wireless network;
Fig. 9 is a flowchart for transmission via wireless medium across wireless network;
Fig. 10A is a conventional example of contention access mechanism with data prioritization;
Fig. 10B is a schematic view of condition of wireless medium occupancy in station A and station B;
Fig. 11 is a schematic view of the beacon from access point;
Fig. 12 is a definition of Selective Contention Backoff Pointer;
Fig. 13A is a schematic view of selective contention between station A and B;
Fig. 13B is a schematic view of condition of wireless medium occupancy in station A and station B;
Fig. 13C is a schematic view of beacon from the access point;
Fig. 14 is a schematic view of the data frame from the station;
Fig. 15A is a schematic view of selective contention between station A and station B;
Fig. 15B is a schematic view of condition of wireless medium occupancy of station A and station B;
Fig. 16 is a schematic view of beacon from access point;
Fig. 17A is a schematic view of another aspect of selective contention;
Fig. 17B is a schematic view of the beacon from access point;
Fig. 18 is a schematic view of last data packet including next transmission information;
Fig. 19A is a schematic view of selective contention between station A and station B;
Fig. 19B is a schematic view of condition of wireless medium occupancy of station A and station B;
Fig. 20 is a systematic process for Medium Dedication Schedule Generation; and
Fig. 21 is Finite State Machine for Transmission Permit Generator.

### BEST MODE FOR CARRYING OUT THE INVENTION

In the following description, for purposes of explanation, specific numbers, times, structures, protocol names and other parameters are set forth in order to provide a thorough understanding of the present invention. The following paragraphs give an exemplification of how the invention can be implemented. However, it will be apparent to anyone skilled in the art that the present invention may be implemented without these specific details. In other instances, well-known components and modules are shown in block diagram in order not to obscure the present invention unnecessarily.

For a thorough understanding of the invention, here below, some operation sequences, information data structures and techniques for calculation are given. Certain data structures are used and they only serve as an example of the implementation of the present invention. It is obvious to the person skilled in the art that in real implementation, new information could be added, and certain parts could be omitted depending on the actual situation they are used in.

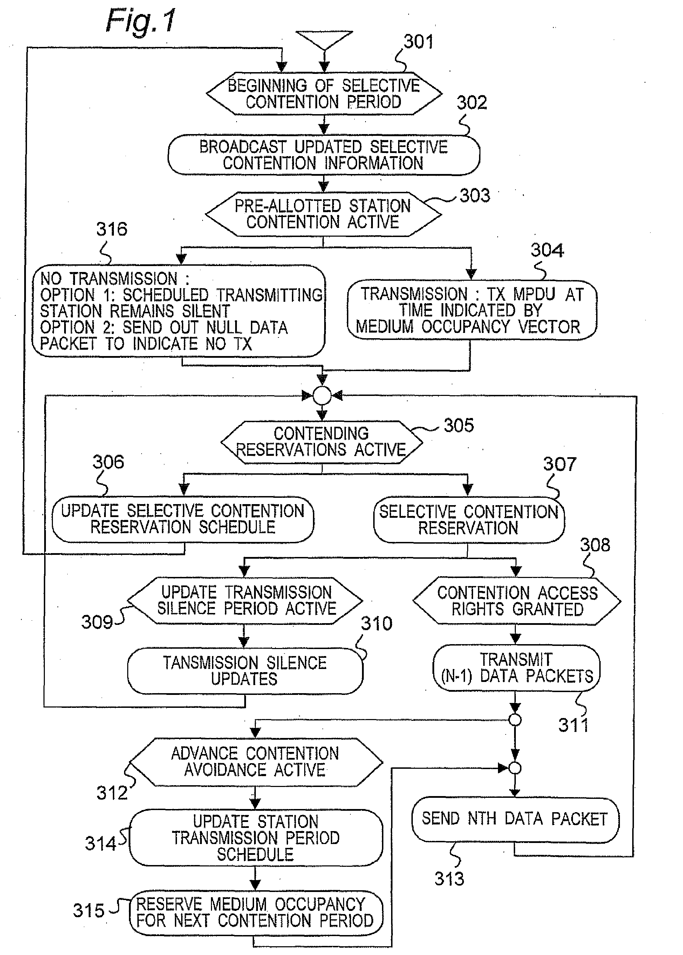

Fig. 1 gives an exemplification of selective contention, as disclosed in this invention, to ensure subsequent zero contention period for transmission of data packets belonging to a data stream after a successful reservation of medium occupancy based on contention method. For the purpose of a better description of this invention, Fig. 2 should be used as a reference for a better understanding of the operations of Wireless Stations and Wireless Central Controller in a wireless network within Selective Contention period.

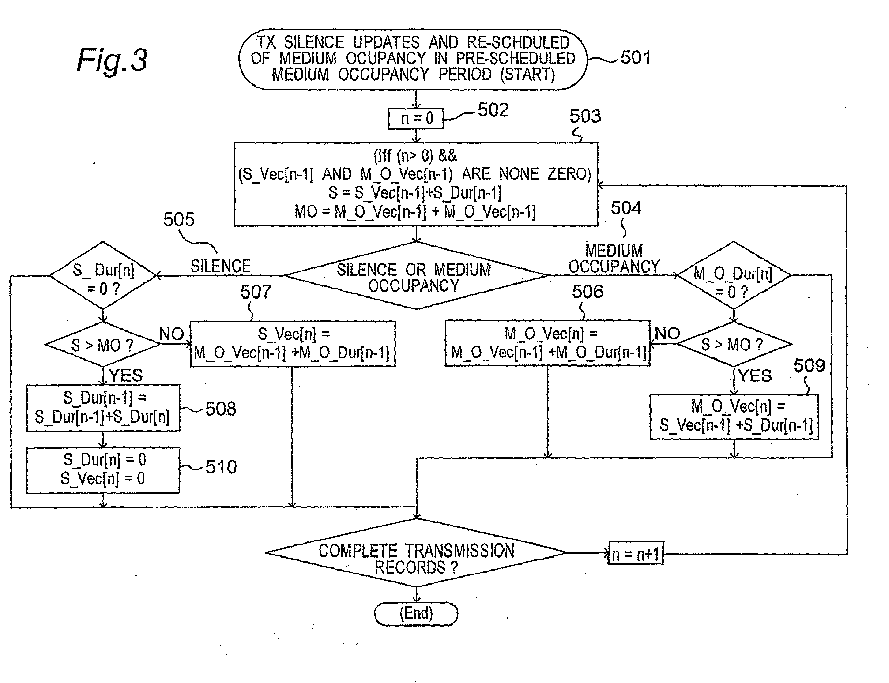

Fig. 2 gives a description of the relationships of other sub-periods within one selection contention period, marked by literal (401). Selective Contention Period timing relationships depicted in Fig. 2 would be a good reference when the embodiment related to Figs. 2 and 3 is read with the HMSC in Fig. 1.

Within one contention period, there are 2 sub-periods; (i) Pre-scheduled medium occupancy (403) and (ii) Medium Occupancy Contention (404). The Pre-Scheduled medium occupancy period is used for data transmission for stations that have won the contention in (404) of previous Selective Contention period. The pointer as indicated as SCB_Ptr, marked by literal (405), is computed from the Selective_Contention_Backoff field of Selective_Contention_Information data structure. The Contention back-offs adopted by each station could result in wireless medium contention, marked by literal (406), after all stations begin to content for data transmission rights. It is possible to have plural number of contentions (406) within the medium Occupancy Contention period.

With reference to seventh aspect of this invention, the high level message sequence chart (HMSC) gives a typical life cycle of selective contention period occur within a wireless network where wireless stations content for rights to transmit. The rights to content are made known to all stations by having a central controller broadcasting a message containing timing parameters described in the Selective_Contention_Information structure, during the process marked by literal (302). The information in the data structure, Selective_Contention_Information, provides an indication where the contention for the 1st transmission of data stream can take place within one selective contention period. Broadcasting of this message indicates the beginning of selective contention period or it can also be used to indicate the end of the selective contention period, based on the values of the Start_n_End parameter in the Selective_Contention_Information. This message is broadcasted at the beginning of the Selective Contention Period and may be added at the end of the Selective Contention Period and before the conditions marked by literal (301).

The message used to indicate the beginning of selective contention period comprises of at least the following parameters:-

```
 Selective_Contention_Information
 {
      Start_n_End;/* A bit field indicating start or end of Selective Contention
 Period */
```

Selective_Contention_Backoff; /* a data field indicating length of time the wireless stations, without prior medium occupancy grant, must wait before contending can starts. Contention for bandwidth reservation is only allowable to the admitted data streams. This field is measured in unit of time from the beginning of the broadcast of Selective_Contention_Information message to the time where contention of 1 st medium occupancy request can take place */ Duration of Selective Contention; /* duration of Selective Period */ }

It is possible to implement by appending all or part of the Selective_Contention_Information parameters in message format (1) to existing data frames such as part of the beacon frame described in the IEEE802.11 specification disclosed in International Standard ISO/IEC 8802-11 : 1999: ANSI/IEEE Std 802.11, 1999 Edition - " Part 11: Wireless LAN Medium Access Control (MAC) and (PHY) Specifications. Another way of implementing Selective Contention is to append all or part of the parameters of Selective_Contention_Information message in the form of information element that could be transmitted by appending to the IEEE802.11 beacon frame. These beacon frame with the Selective_Contention_Informatian message that the information element is broadcasted by the Medium Occupancy controller of the Wireless network it governed periodically. Some of the parameters such as Duration of Selective Contention can be implemented as a variable shared by all stations within the wireless network through SNMP's (Simple Network Management Protocol) Management Information Based (MIB) value.

After receiving the message in (302), all stations in the wireless network are in the Pre-Alloted station Contention Active state, (303). All stations within the control of the wireless network shall only transmit data if there is prior wireless medium occupancy won as a result of contention from previous selective contention period, (304). The precise time to transmit data packets from the data stream is provided by the values stored in the Medium Occupancy vectors: Time for transmission indicated by M_0_Vec[n] and transmission duration indicated by M_O_Dur[n]. In the event, the station decides to cease data transmission in the pre-Alloted Station Contention Active state, process (316), the station can choose to cease transmission or to send out a NULL data packet to indicate that the station has given up the Medium Occupancy time the station reserve in previous Selective Contention period.

For Stations taking part in obtaining medium occupancy during this selective contention period, transmitting stations must observe and keep a record of the m instances of Transmission silence period and medium occupancy period of a specified data stream admitted to the wireless network governed by a central medium occupancy controller. The exemplification of this record described in this embodiment is

```
 Transmission Record {
       M_O_Vec[n];/* Medium Occupancy Start time measured from the
 beginning of Selective_Contention_Information to the start of Medium
 Occupancy time for stream n */
      M_O_Dur[n]; /* Medium Occupancy Duration or End time */
      S_Vec[m]; /* Transmission Silence Start Time of instance m */
      S_Dur[m]; /* Transmission Silence Duration or end time of instance m
 */
 }
```

Stream Transmission time parameters is the time where the data packets of the specified data stream are scheduled to contend for medium for transmission. Transmission Silence time parameters are the time where the station should not content for the medium occupancy for transmission. Transmission Silence vectors, consisting of S_Vec[n] and S_Dur[n], are contiguous transmission block separated only by time periods due to contentions or Medium Occupancy Vectors. Medium Occupancy Vectors comprises of M_O_Vec[n] and M_O_Dur[n]. Transmission Silence time are time observed by the stations not transmitting data at the specified time from transmissions from other stations. In IEEE802.11, this value can be reflected in the Duration/ID field disclosed in International Standard ISO/IEC 8802-11: 1999 : ANSI/IEEE Std 802.11, 1999 Edition - " Part 11: Wireless LAN Medium Access Control (MAC) and (PHY) Specifications.

Transmission of data based on medium occupancy gathered from the Station Transmission record can take place in (304) if medium occupancy contention is successful by the station in the previous Selective Contention period. Transmission data packets, in HMSC state marked by literal (304) take place in (403) of the Selective Contention Period timing relationship depicted in Fig. 2. Based on the Selective_Contention_Backoff of the Selective_Contention_Information, all stations compute and keep a copy of SCB_Ptr (405) for the Selctive Contention Period and begin to content for 1 st data transmission of the stream admitted to the wireless network. Contention for Medium Occupancy reservation, as shown in the HMSC in Fig. 1, can start by the station if station is in the condition marked by (305). Stations wishing to have the 1 st transmission of data packets from the admitted streams will begins contending for Medium Occupancy as in (307).

Contentions and transmissions of data in a successfully contended wireless medium occupancy period during the Medium Occupancy Contention period as in (404) shall be allowed to be repeated in the Pre-Scheduled Medium Occupancy period in the next selective contention period (401). The station with a successfully contended medium occupancy in the period as marked in (404) will be in the Contention Access Rights Granted condition (308) and allowed to transmit data packets, in processes marked by literal (311) and (313). Process marked by (311) will be allowed to transmit up to (n-1) packets and process (313) transmit the nth packet, assuming there are n (where n > 1) data packets for transmission for the medium occupancy period granted from the successful contention. After transmitting (n-1) data packets, the transmitting station of the medium occupancy period may choose to be in the state marked by literal (312). In the (312) state, the station may specifically asked for similar amount of medium occupancy time in the next selective contention period (401) by performing tasks in (314) and (315). In process marked by literal (314), station may choose to consolidate the transmission of data packets of the data streams admitted won in the Medium Occupancy Contention Period, (404) for the next transmission. Process (315) will make the necessary control information to indicate that the wireless occupancy is needed to the central controller by appending the information in the last data packet transmission. The information sent in (315) is depicted the Next_Transmission data structure.

```
 Next Transmission {
      Repeat_Flag; /* A bit field to indicate to all stations and
 central controller that the next Selective Contention Period should have the
 specified Medium Occupancy period or to have the Medium occupancy period
 release */
      Stream Transmission Start; /* time measured from the
 beginning of Selective_Contention_information transmission */
      Stream Transmission Duration or End time; /* End time of transmission
 of the data stream in unit time or measured from the beginning of
 Selective _Contention_Information */
 };
```

Both wireless central controller and wireless stations within the wireless network controlled by the said wireless central controller must keep a list of transmission by other stations during Selective Contention Period by process marked by (310) during the Update Transmission Silence Period active condition (309). In the IEEE802.11, this is updates knows as the Network Allocation Vector disclosed in International Standard ISO/IEC 8802-11 : 1999 : ANSI/IEEE Std 802.11, 1999 Edition - " Part 11: Wireless LAN Medium Access Control (MAC) and (PHY) Specifications updates.

On detecting the end of the Selective Contention Period, as detected in process (306), either it is through time out of the central timer or through the time out created by the station through the value in the Duration of Selective_Contention parameter of the Selective_Contention_Information, contention for wireless medium must ceased. The central controller would be in the process marked by (306), will then perform the updates based on the medium occupancy registered in the Pre-Schedule Medium Occupancy Period and the Medium Occupancy Contention Period, to create a new Selective_Contention_Backoff parameter for the next selective contention period. A new broadcast consisting of the new Selective_Contention_Backoff parameter will be broadcast to all wireless stations in the beginning of the Selection Contention Period.

Fig. 3 shows the detail depiction of the transmission silence and specified stream transmission being updated at the station and the central controller that is responsible for broadcasting the data in the Setective_Contention__Information to the stations in the wireless network the central controller controlled in the Pre-Scheduled Medium Occupancy Period for the next Selective Contention Period. This is to eliminate the contention time wasted in the Medium Occupancy Contention Period, (404), which will form part of the Pre-Scheduled Medium Occupancy Period in the next Selective Contention period.

The implementation in Fig. 3 assumes that the Transmission Silence vector and Medium occupancy updates are based on inter-leaved transmission silence and medium occupancy period. The update process in Fig. 3 can begins, (501), when the end of the Selective Contention period. The central controller and the stations within the wireless network can use the same flowchart in Fig. 3 to create Selective Contention Reservation Schedule within the Pre-Scheduled medium Occupancy period for subsequent Selective Contention Period. Selective Contention Reservation Schedule at the Stations consists of Silence Transmission vector consisting of S_Vec[m] and S_Dur[m] parameters of Transmission Record structure and Medium Occupancy vectors of stream n consisting of M_0_Vec[n] and M_O_Dur[n] of the Transmission Records structure. For each Selective Contention Reservation Schedule update, the total number of non-zero Silence Transmission vectors and Medium Occupancy Records kept by both station and central controller are updated. Process block (503), determines the last point of Transmission Silence of the last fragment and the Medium Occupancy vector nearest to the consecutive Transmission Silence fragment or the next Medium Occupancy vector.

If next vector to be updated is a Transmission Silence fragment, the new Transmission Silence Fragment is updated based on the condition if the preceding vector is a Medium Occupancy vector or Transmission Silence Vector. If current vector is a Medium Occupancy vector, process path indicated in (504) will be selected. Medium Occupancy vector is updated according to process in (506) and (509).

In the case of current vector is Transmission Silence Fragment, the updates of Transmission Silence Fragment is updated according to (507), if the preceding vector is Medium Occupancy vector. Else if the preceding vector is a Silence Transmission vector, the current vector will be updated and the duration of current vector will be added to the preceding Silence Transmission Vector as in (508). The current vector is destroyed as indicated in process (510) by initialising to null.

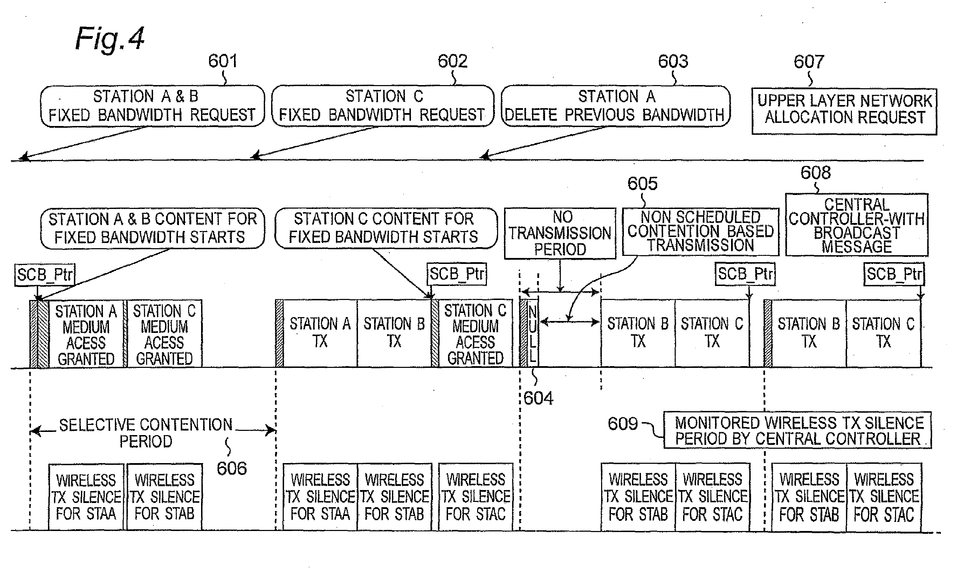

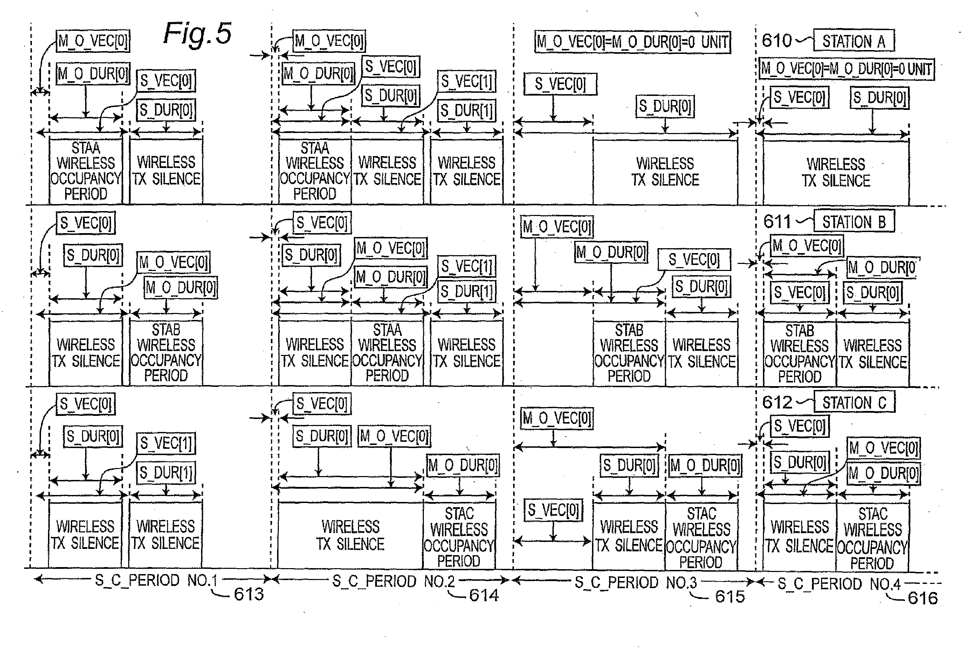

Figs. 4 and 5 give an example of 3 stations contending selectively for the wireless medium occupancy from the time the stream is admitted into the wireless network to the time the deletion of stream. The timing diagram illustrated in Figs. 4 and 5 depicts the time the streams from the stations are admitted into and deleted from the network. Deletion and admission of streams are performed through additional signalling from upper layer network resource, (607). The time line indicated in (607), provides the time data stream are admitted into and exit from the wireless network. The scheduled broadcast of the Selective Contention information by the central controller is shown in the timing chart indicated by literal (608). Contentions and the updates of the pointer (SCB_Ptr) derived from the value carries in the Selective Contention Backoff parameters are also shown the timing chart.

Updates of the Transmission Record parameters are based on the value used and indicated in the 4 Selective Contention Period, (613), (614), (615) and (616). The updates illustrated in the 4 Selective Contention Period are performed at the end of the Selective Contention Period. In this illustration, the Selective Contention Period, (606), are bounded by two broadcast frames consisting of Selective _Contention_Information,

The timing line, marked by literal (609), illustrates the contention for medium occupancy in the Medium Occupancy Contention Period. The resulting time chart, illustrated in time line (608), shows the compaction time of Medium Occupancy periods resulted from the transmission Silence and Re-Scheduled of Medium Occupancy updates dictated by the process indicated by (501) of Fig. 3. All stations and central controller have to enforce how the transmission records are updated. Time lines for Station A (610), Station B (611) and Station C (612) give the instances of Medium Occupancy contention being admitted, re-scheduled and deleted. At different Selective Contention Period, it illustrates the instances of the different parameters of transmission records. In this example, deletion of Medium Occupancy by station A is based on Option 1 of process (316) of Fig. 1.

For further illustrative purpose, time line (608) shows how termination of Medium Occupancy can take place by having station A send out a null packet (604) in the Medium Occupancy granted in earlier Selective Contention Period. This will allow the medium occupancy contention to take place among stations needing bandwidth on ad-hoc basis marked by literal (605). The amount of time for contention and transmission of data is bounded by the previous medium occupancy given up by station A.

For a better understanding of the invention, here below, some operation examples are given.

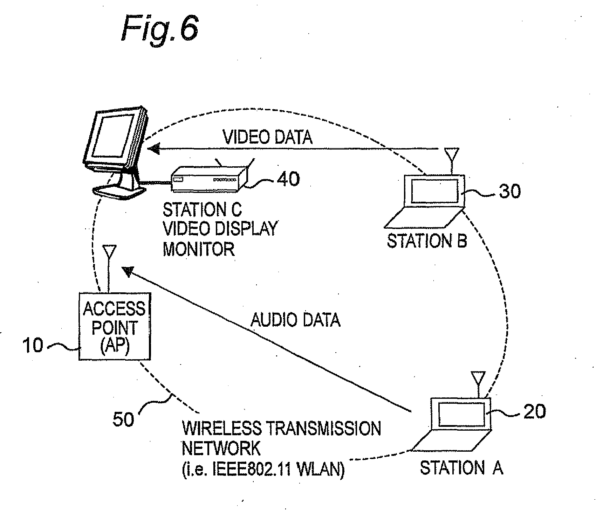

All the examples below will be described based on the scenario shown in Fig. 6. Fig. 6 is a schematic view of a wireless network including a central controller (which can be called "Access point (AP)) and 3 stations (A, B, C) available. Station A is trying to send audio data to the AP and station B is trying to send video data to station C which is a kind of video display terminal. In conventional systems using contention access mechanism like CSMA/CA (carrier sense multiple access with collision avoidance), all stations who are senders like station A & B have to contend for channel access before every transmission.

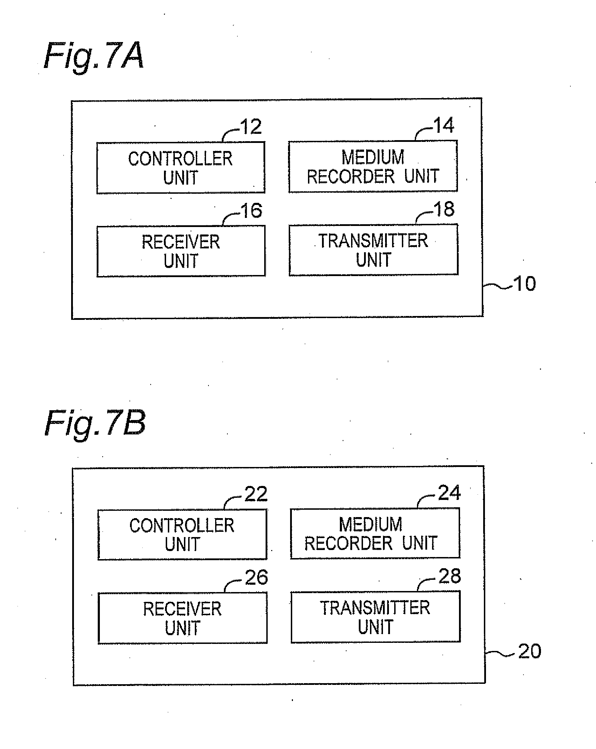

Fig. 7A is a schematic view of the access point (10) of the wireless network. The access point (10) has a controller unit (12), a medium recorder unit (14), receiver unit (16), transmitter unit (18). The medium recorder unit (14) records start and end period of contention medium occupancy period and start and end period of prescheduled medium occupancy period. Then, the stations (20, 30, 40) contend for wireless medium occupancy in order to transmit data stream in contention medium occupancy period. The wireless medium occupancy is prescheduled, and transmission is performed according to the prescheduled wireless medium occupancy in prescheduled medium occupancy period. The contention medium occupancy period and the prescheduled medium occupancy period are included in the selective contention period. The controller unit (12) preschedules wireless medium occupancy reservation having a duration period for contention successful station in prescheduled medium occupancy period, and moves forward the start period of contention medium occupancy period of next selective contention period by the duration period. The transmitter unit (18) transmits a beacon signal including information for start period of the contention medium occupancy period to the stations. The receiver unit (16) receives data stream transmitted from the station (20).

Fig. 7B is a schematic view of the station (20) of the wireless network. The station (20) has a controller unit (22), a medium recorder unit (24), receiver unit (26), transmitter unit (28). The receiver unit (26) receives a beacon signal including information of start period of contention medium occupancy period transmitted from the access point (10) via the wireless medium. In the contention medium occupancy period the station (20) contends with other station for wireless medium occupancy to transmit data stream. The transmitter unit (28) transmits data stream via the wireless medium. The controller unit (22) extracts the information of the start period of the contention medium occupancy period from the beacon signal, and monitors condition of wireless medium occupancy at every monitoring period among the start period and the end period of the contention medium occupancy period, then instructs the transmitter to transmit data stream when the controller unit (22) confirms that wireless medium is not occupied.

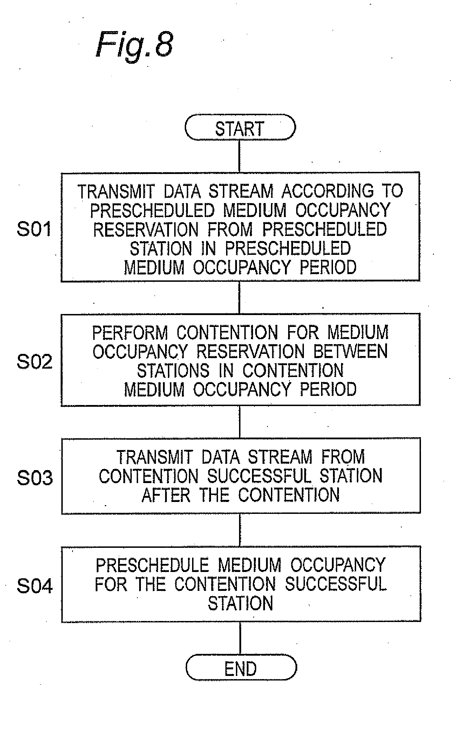

Fig 8 is a flowchart for transmission via wireless medium across wireless network. The transmission method includes:
(i) transmitting data stream from the station according to prescheduled wireless medium occupancy reservation for the station within prescheduled medium occupancy period of a selective contention period (S01);
(ii) performing a contention between the stations for wireless medium occupancy for a contention successful station to transmit data stream within only contention medium occupancy period of the contention selective period (S02);
(iii) transmitting data stream from the contention successful station after the contention (S03); and
(iv) prescheduling a wireless medium occupancy reservation for the contention successful station to transmit within a prescheduled medium occupancy period of next selective contention period (S04).

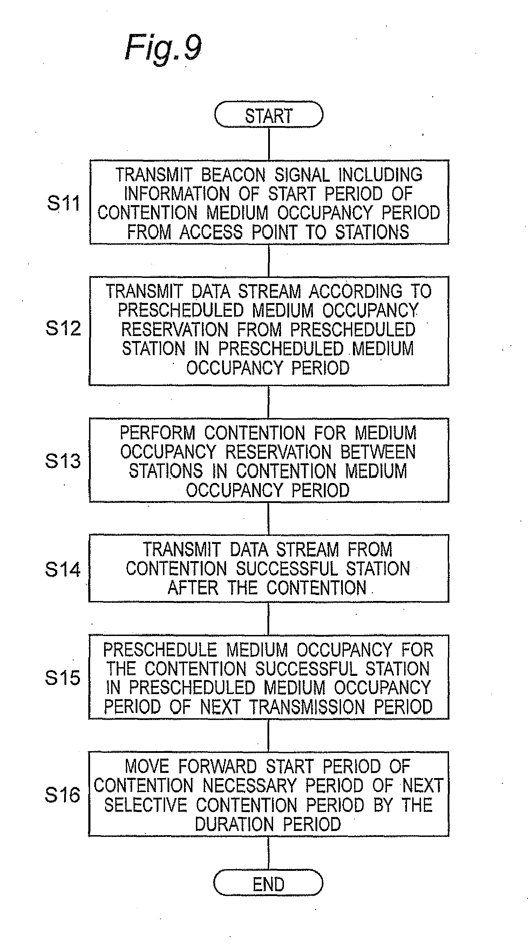

Fig. 9 is a flowchart for another transmission via wireless medium across wireless network. The transmission method includes:
(i) transmitting a beacon signal including an information about start period of the contention medium occupancy period to each station (S11);
(ii) transmitting data stream from the station according to prescheduled wireless medium occupancy reservation for the station within prescheduled medium occupancy period of a selective contention period (S12);
(iii) performing a contention between the stations for wireless medium occupancy for a contention successful station to transmit data stream within only contention medium occupancy period of the contention selective period (S13);
(iv) transmitting data stream from the contention successful station after the contention (S14); and
(v) prescheduling a wireless medium occupancy reservation for the contention successful station to transmit within a prescheduled medium occupancy period of next selective contention period (S15);
(vi) moving forward start period of a contention medium occupancy period of next selective contention period by the duration period (S16).

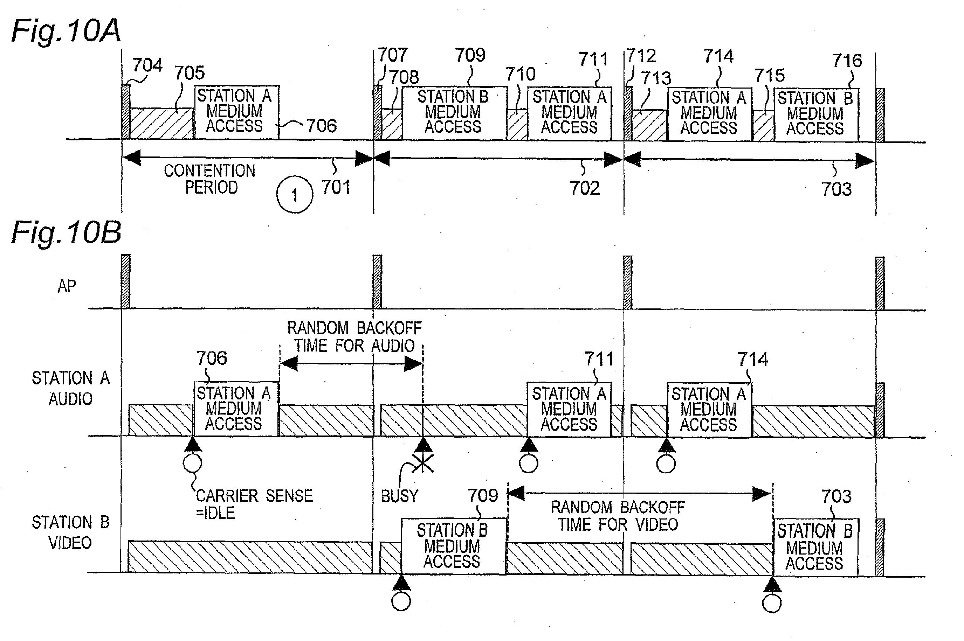

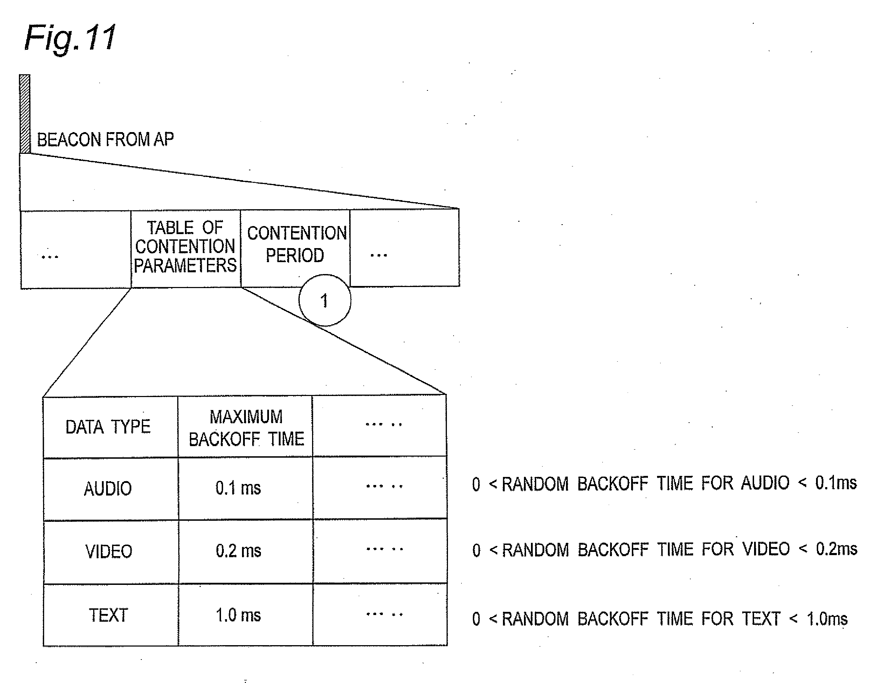

Figs. 10A, 10B, and 11 shows a conventional example of contention access mechanism with data prioritization, At the beginning of each contention period (701,702,703), AP periodically broadcasts a frame called "beacon frame" (704,707,712) in order not only to perform timing synchronization but also to indicate broadcasting information to all stations associated with itself. After receives the beacon frame, all the senders (station A & B) start contending for channel access.

As shown in Figs. 10A and 10B, station A performs carrier sense in the 1 st period (701) and because the carrier sense indicates that channel is idle (nobody's using the channel) station A performs its transmission (706) immediately after the carrier sense. Then, station A is successful for the contention (705) in the 1 st period (701). After station A ends up its transmission (706) in the 1 st period (701), it has to wait for a random period before performing the next carrier sense. Basically, the random period of time that a station has to wait before performing its next carrier sense is called "Random Backoff time" and the operation to wait for a Random Backoff time is called "perform (random) backoff". After the transmission (706) in the 1st period (701), station A performs random backoff and then perform carrier sense again in the 2nd period (702). However, the carrier sense indicates that channel is busy (because the channel is occupied by station B) so station A has to perform random backoff again immediately after the carrier sense. Then, station B is successful for the contention (708) in the 2nd period (701).

All the operations as described in the above paragraph are being performed and repeated by each sender station. This kind of access mechanism allows for automatic channel sharing and reduce the collision probability which rapidly increases with an increase of sender stations.

In addition to the access mechanism, data prioritization can also be introduced to provide a suitable QoS for different data type as described in Fig. 11. For example, AP can determine "Maximum backoff time" for each Data type in order to control average random backoff time to meet different delay bound conditions required by each data type. Here, "Maximum backoff time" indicates a maximum value that limit the upper bound of random backoff time. For example, if "Maximum backoff time" = 0.1 ms, this means that random backoff time must be a random value which is more than 0ms but less than 0.1 ms.

Suppose that data type is divided into 3 types, Audio, Video, and Text. Basically, Audio data type requires the most severe delay bound condition (shortest delay bound) compared to the other data types so Maximum random backoff time for Audio should be smaller than Video and Text type. In the case of Video data type, Video data also requires a severe delay bound condition but not as much as Audio data so Maximum random backoff time for Video should be larger than Audio type but smaller than Text type. According to the above consideration, AP can control average random backoff time for each data type by indicating a "Table of contention parameters" in beacon frame like shown in Fig. 11. Parameters indicated inside the table can be adjusted according to load conditions, channel conditions, etc. to provide a suitable QoS for each data type. In case of Fig. 11, we can see that because "Maximum backoff time" for Audio data is set to be smaller than that for Video data, station A who is sending Audio data tends to have more chances to access the channel than station B. According to this, average packet delay for Audio data transmitted by station A can be expected to be shorter than that for Video data transmitted by station B.

However, under high contention conditions, for example when traffic load is high or when a number of users is large, because a probability that carrier sense will indicate idle is very low, the probability that QoS conditions such as delay bound etc. required by a station can not be satisfied is very high even for station A who has the highest access priority (shortest Maximum backoff time). In other words, it is hard to provide QoS guarantee by a contention based access mechanism in which a sender has to perform contention (carrier sense with random backoff) every time before transmission. In order to cope with this problem, the invention access mechanism which is called "Selective Contention" is proposed.

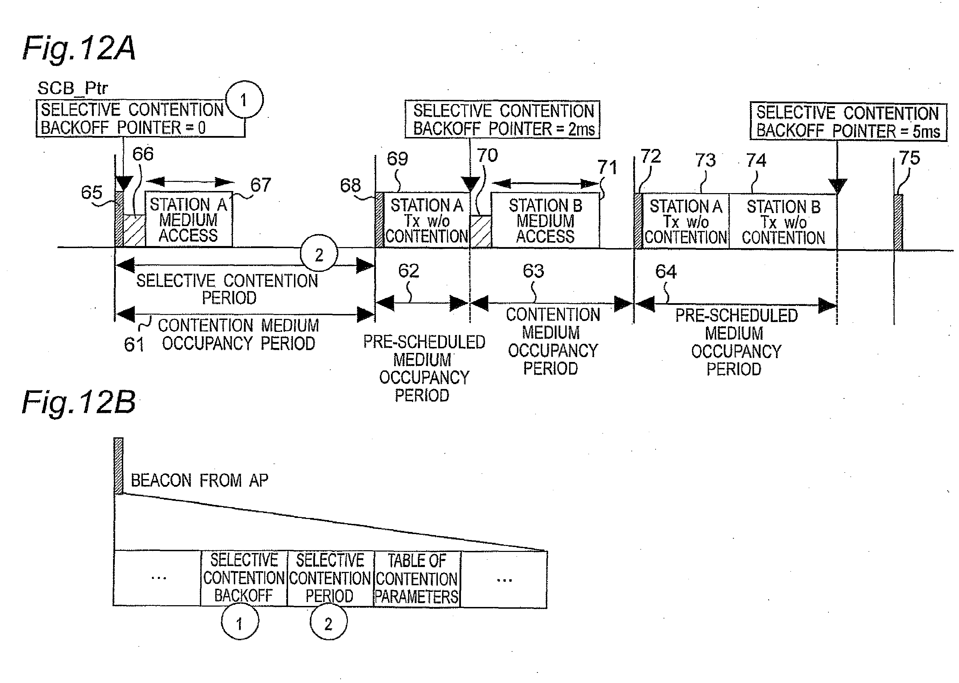

Figs. 12 to 19 show concepts of the invention access mechanism "Selective Contention".

Fig. 12A shows a definition of Selective Contention Backoff Pointer. In order to perform selective contention, a new information called "Selective_Contention_Backoff' is introduced by indicating it in the beacon frame as shown in Fig. 12A. This information is also being demonstrated as SCB_Ptr (1) in the transmission sequence as shown at the top of the same figure.

The "selective contention period" (2) indicates duration of selective contention period. This information acts as same as the contention period as shown in Fig. 10A.

At the initial stage (1st period) (61), AP indicates "Selective_Contention_Backoff' = 0 which means that the whole Selective Contention Period is recognized as "Contention Medium Occupancy Period". In this case, a conventional contention access as explained in Figs. 10A and 108 can be performed immediately after the beacon (65,68,72,75).

In this 1st period, station A contends for channel access and occupies channel for 2ms. Then, station A is successful for the contention (66) in the "Contention Medium Occupancy Period" (61). Suppose that station A has more data to transmit, AP registers station A as "Pre-scheduled station" to allow station A to repeat its transmission from the next selective contention period (2nd period). According to the registration, AP has to indicate to all stations that a period of 2ms after the beacon of the 2nd period is "Pre-Scheduled Medium Occupancy period" (62) and is reserved for a "Pre-Scheduled station(s)" which in this case is station A. AP broadcasts such information to all stations by indicating "Setective_Contention_Backoff" =2ms in the beacon of the 2nd period as shown in the Fig. 10B. According to this, only station A can gain access to the channel for 2ms during "Pre-Scheduled Medium Occupancy period" of the 2nd period without performing any contention. After the "Pre-Scheduled Medium Occupancy period" (62), the remaining time until the next beacon (72) will be transmitted is automatically recognized by all stations as "Contention Medium Occupancy Period" (63).

Consequently, all stations which is not being registered as "Pre-Scheduled station" has a right to contend for a channel access in this "Contention Medium Occupancy Period" (63).

As shown in Figs. 12A and 12B, we can see that in the 2nd period after the end of "Pre-Scheduled Medium Occupancy period" (62), station B starts contending for channel access (71) and occupies channel for 3ms. Then, station B is successful for the contention (70) in the "Contention Medium Occupancy Period" (63). Suppose that station B has more data to transmit, AP also registers station B as "Pre-scheduled station" to allow station B to repeat its transmission from the next selective contention period (3rd period). According to the registration, AP has to indicate to all stations that a period of 5ms after the beacon (72) of the 3rd period is "Pre-Scheduled Medium Occupancy period" (64) and is reserved for a "Pre-Scheduled station(s)" which in this case are station A & B. AP broadcasts such information to all stations by indicating "Selective_Contention_Backoff' = 5ms in the beacon (72) of the 3rd period as shown in the Fig. 12A. According to this, both station A and station B can gain access to the channel (73,74) for 2ms and 3ms respectively during "Pre-Scheduled Medium Occupancy period" (64) of the 3rd period without performing any contention.

The invention selective contention allows any station which succeeds its first contention access once and is registered by the AP as "Pre-scheduled station" to gain access to the channel periodically without contention. It is clear that the invention can drastically decrease contention and also provide a better QoS guarantee than the conventional contention mechanism even when traffic load is high or when a number of users is large.

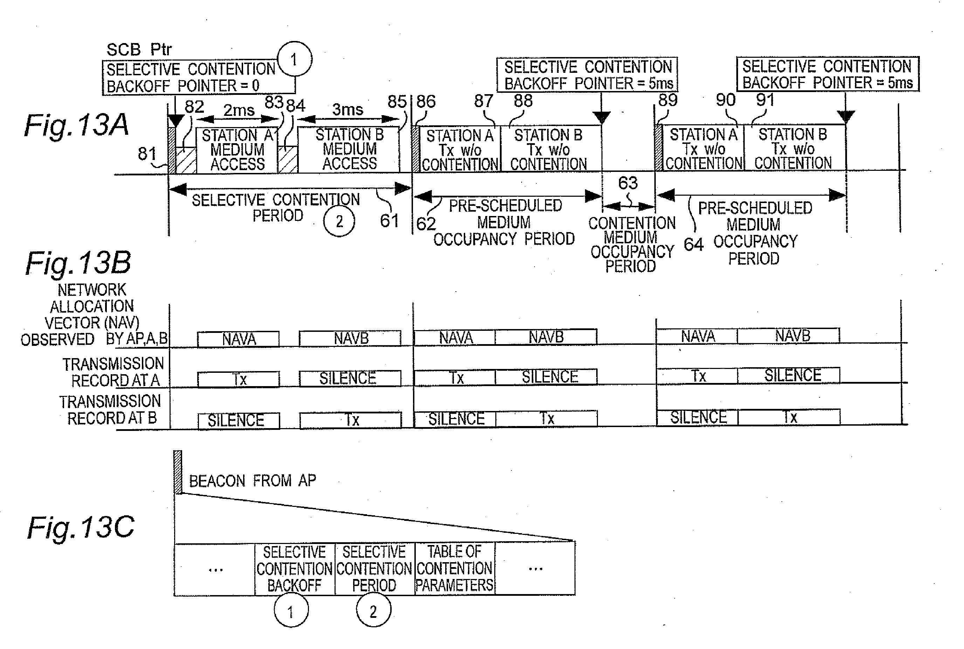

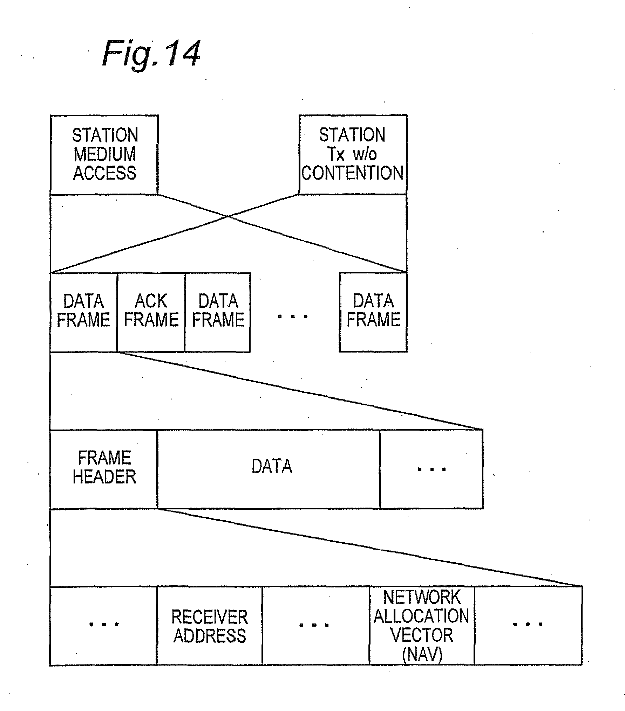

Next, let's focus on the transmission record which is also introduced in the invention in addition to the Selective_Contention_Information. The reason that each station has to keep transmission record individually is described below based on the situation shown in Figs. 13A, 13B, 13C, and 14. In Fig. 13A, both station A and station B contend for channel access and occupy the channel for 2ms and 3ms respectively in the 1 st period (61). Then, station A is successful for the contention (82) and station B is successful for the contention (84) in the "Selective Contention Period" (61). AP registered both station A and station B as "Pre-scheduled stations" and indicates "Selective_Contention_Backoff" = 5ms in the beacon (86) of the 2nd period to reserve a time period of 5ms after the beacon for station A and B. After received the beacon (86) of the 2nd period, station A and B checks their own transmission record observed in the 1 st period (61). By checking the transmission record of the previous Selective Contention Period, each "Pre-scheduled station" can confirm its
1. transmission order and
2. time to start and end transmission
in the current Selective Contention Period.

As shown in the Fig. 13A, station A can confirm that in the 1st period (61) it won a contention at the 1st order and occupied channel for 2ms. Station A can also confirm that after its transmission (83) the channel was occupied (85) by someone (station B in this case) for 3ms. According to this, station A can decide that it must perform transmission at the 1 st order again in the 2nd period. Consequently, station A starts its transmission (87) without contention immediately after the beacon (86) in the 2nd period.

As for station B, station B can confirm that in the 1 st period (61) it won a contention at the 2nd order and occupied channel (85) for 3ms. Station B can also confirm that before its transmission (85) the channel was occupied (83) by someone (station A in this case) for 2ms. According to this, station B can decide that it must perform transmission at the 2nd order after waiting for 2ms in the 2nd period. Consequently, after received the beacon (86) of the 2nd period station B waits for 2ms and then starts its transmission (88) without contention. Station B occupies the channel for 3ms until the end of "Pre-Scheduled Medium Occupancy period" (62) of the 2nd period. The operations occurred in the 2nd period as described above are being repeated on and on every selective contention period.

"Silence" in the transmission record as shown in Fig. 13B is the time period where other stations are performing their transmission and the station has to keep silence (not transmitting anything) in order not to interfere transmission of other stations. In IEEE802.11 systems, a station can decide when it should be silence by observing the Duration/ID field indicated in the frames sent by other stations. The Duration/ID field is indicated as "Network Allocation Vector (NAV) field" as shown in Fig. 13B. This field is basically indicated in the frame header of each frame.

The details of how to update transmission record parameters can be referred to Figs. 3 to 5.

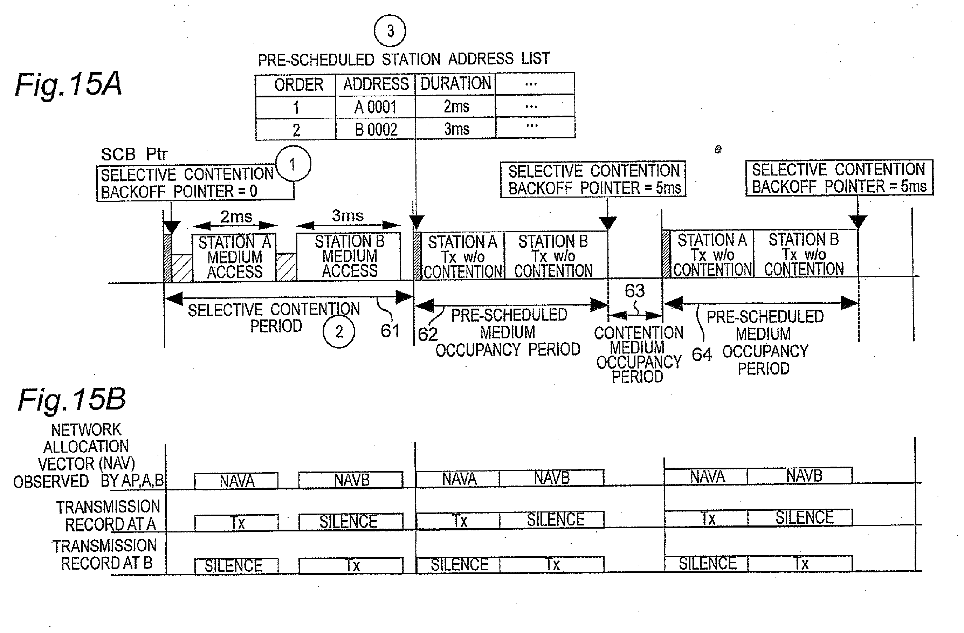

It is clear that an introduction of transmission record helps "Pre-Scheduled stations" to decide its transmission order and start time. However, if any station has a mistake in its transmission record, the station may perform transmission with wrong order, which leads to an occurrence of collision inside "Pre-scheduled Medium Occupancy Period". To avoid such problems, "Pre-scheduled Station Address List" as shown in Fig. 15A can also be introduced in addition to the "transmission record"

"Pre-scheduled Station Address List" is indicated in a beacon frame and used to tell all stations that
(1) Which stations are currently registered as Pre-scheduled stations?
(2) What is the transmission order for each Pre-scheduled station?
(3) How long can a Pre-scheduled station occupy the channel in "Prescheduled Medium Occupancy Period"

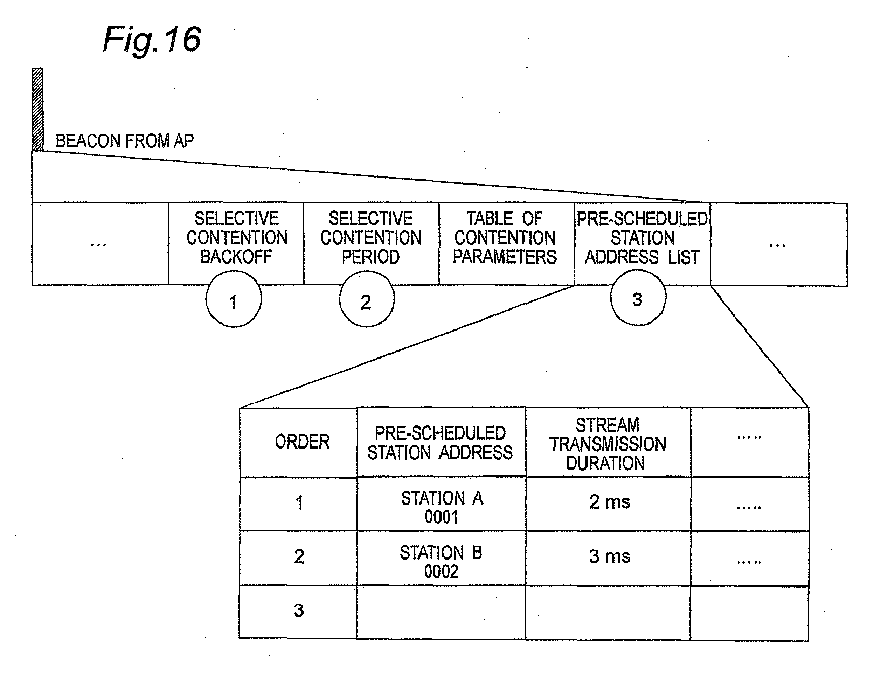

(1) is indicated as "Pre-scheduled Station Address", (2) is indicated as "Order" and (3) is indicated as "Stream Transmission Duration" in the Fig. 16.

AP indicates "Pre-scheduled Station Address List" within every beacon frame and broadcasts to all stations at the beginning of every Selective Contention Period.

Fig. 7A, 17B, and 18 shows how to use Next Transmission Information. As explained above, the station which successfully contended channel occupancy in "Medium Occupancy Contention Period" will be allowed to transmit data packets without contention in "Pre-scheduled Medium Occupancy Period" from the next Selective Contention Period. A station can indicates its intention whether to continue transmission in the next Selective Contention Period or to suspend transmission and release its own Pre-scheduled medium occupancy time, by indicating Next transmission Information in the last packet transmitted in the current Selective Contention Period.

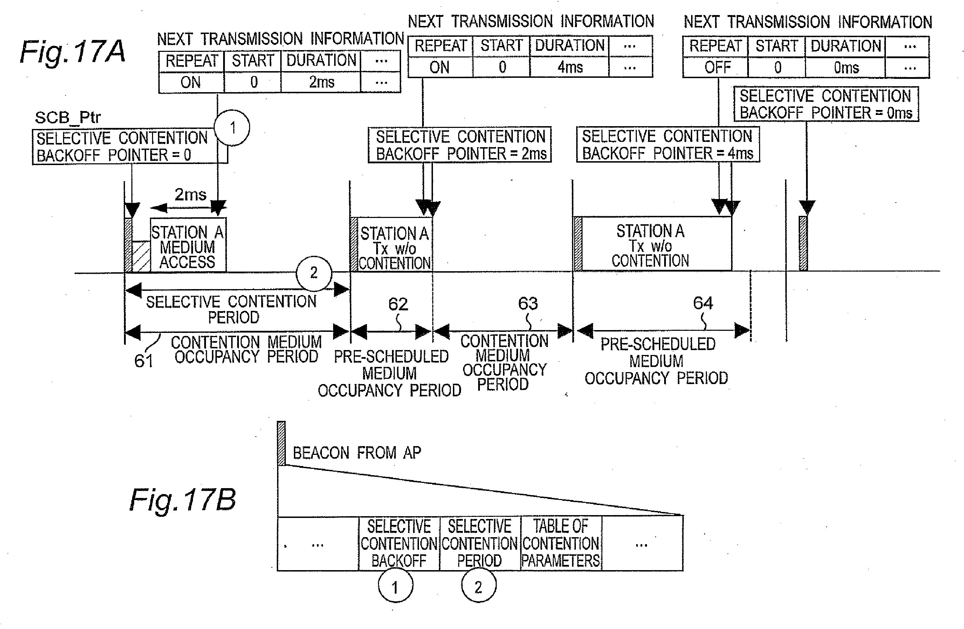

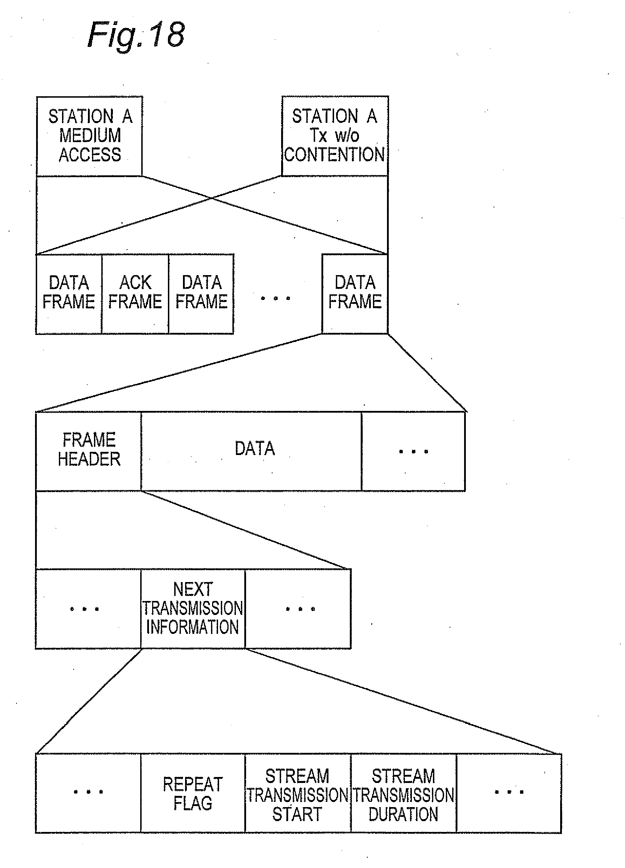

In the Figs. 17A, 17B, and 18, station A indicates "Repeat_Flag" = ON with "Stream_Transmission_Duration" = 2ms in the Next Transmission Information field of the last packet transmitted in the 1st period in order continue its transmission in the 2nd period. According to this, AP registers station A as "Pre-scheduled station" and reserves a time period of 2ms by indicating "Selective_Contention_Backoff" = 2ms in the beacon frame of the 2nd period. After receives the beacon, station A occupies the channel for 2ms by continuously transmitting data packets without contention in the 2nd period. Here, suppose that station A wants to continue its transmission in the 3rd period with transmission duration of 4ms. In this case, station A indicates "Repeat_Flag" = ON again but change the value of "Stream_Transmission_Duration" to 4ms in the Next Transmission Information field of the last packet transmitted in the 2nd period in order continue its transmission in the 3rd period. According to this, AP reserves a time period of 4ms by indicating "Selective_Contention_Backoff' = 4ms in the beacon frame of the 3rd period. After receives the beacon, station A occupies the channel for 4ms by continuously transmitting data packets without contention in the 3rd period. Here, suppose that station A wants to stop transmission from the next (the 4th period) Selective Contention Period. In this case, station A indicates "Repeat_Flag" = OFF in the Next Transmission Information field of the last packet transmitted in the 3rd period in order to release the Pre-scheduled medium occupancy time of 4ms reserved for itself. According to this, AP indicates "Selective_Contention_Backoff" = 0ms in the beacon frame of the 4th period. Consequently, at the 4th period, the whole selective contention period is recognized as "Contention Medium Occupancy Period" as shown in the Fig. 17B.

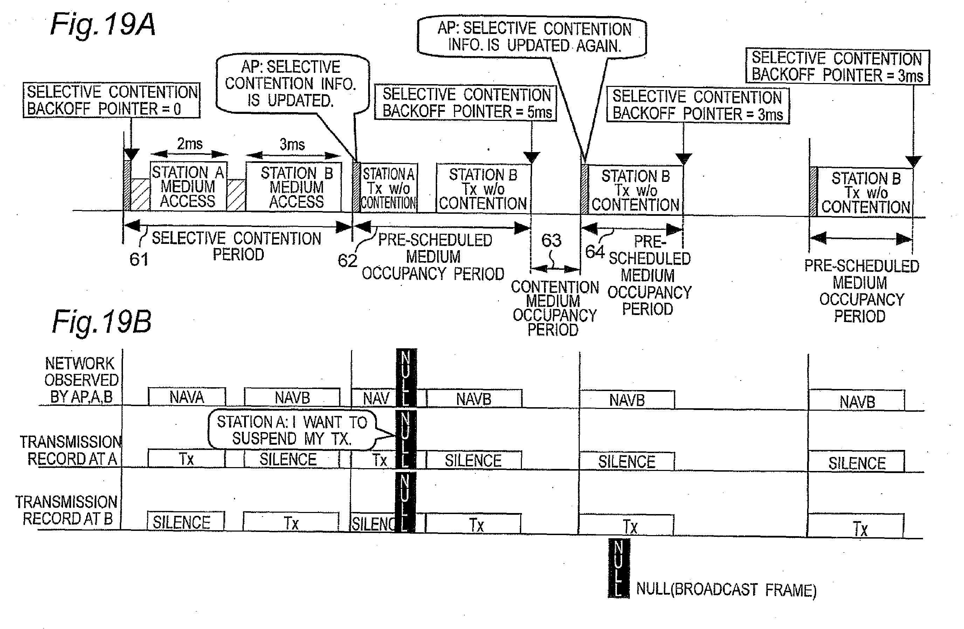

A Pre-scheduled station can also release its own Pre-scheduled medium occupancy time by sending a broadcasting frame such as "Null Frame" to AP and all stations whenever it wants as shown in Figs. 19A and 19B. Figs. 19A and 19B show an example for suspension of Pre-scheduled transmission by using Null Frame. As shown in the Figs. 19A and 19B, station A which is a "Prescheduled station" sends Null frame in the 2nd period to indicate that it wants to suspend its transmission in "Pre-scheduled Medium Occupancy Period". Upon reception of Null Frame, AP and other Pre-scheduled stations recognize that transmission order in the "Pre-scheduled Medium Occupancy Period" changes and have to be updated. In this case, station B which is "Pre-scheduled station" confirms its own transmission record and finds that station A which was a "Prescheduled station" transmitting at the first order has already suspended its "Prescheduled transmission". Consequently, all Pre-scheduled stations except station A recognize that they have to perform "Pre-scheduled transmission" at 1 step younger order. In this case, station B which previously performed "Prescheduled transmission" at the second order recognize that it transmission order is changed from the second (2nd) order to the first (1st) order. And at the same time, AP release Pre-scheduled medium occupancy time of 2ms which is reserved for station A by updating the value of "Selective_Contention_Backoff' from 5ms to 3ms and indicating "Selective_Contention_Backoff' = 3ms in the beacon of the 3rd period.

According to this, after receives the beacon of the 3rd period, station B starts its Pre-scheduled transmission immediately as shown in the Figs. 19A and 19B.

The invention solves the problems by providing a systematic process to equip the network device to become QoS awareness; a means to reject admission of stream that will cost transmission medium to be overloaded; a means to shape the emission rate of data units in a form of short burst in order to reduce the number of transmission permit required; a means to generate transmission permit to serve multiple transmission queues concurrently; a means to transmit data units of all the traffic streams in the manner that QoS requirement is not being violated; a means of creating a bounded period called the selective contention period for controlled contention of wireless medium occupancy time; a system where the stations and the central controller contend for wireless medium at a selected time in every selective contention period depending on the traffic conditions; a means for the stations and central controller to have a distributed scheduling of transmission by keeping a transmission records at each stations; a means to update the transmission records; a means to reserve and delete scheduled medium occupancy time within the selective contention period a system to reserve and delete schedule medium occupancy time using contention based wireless medium occupancy access method.

### Operation of the Invention

With the present invention, all traffic streams with transmission being coordinated are being rate controlled and shaped before emitting into a single transmission queue. Data units of all traffic streams in the transmission queue are being served in First-In-First-Out fashion. On the other hand, for traffic streams with transmission not being coordinated are being admission controlled and categorized before emitting to their respective category transmission queue. Data units in a transmission queue are only permitted for transmission when transmission permit for that queue is granted. Furthermore, their respective Transmission Controller of a transmission queue is coordinating the transmission process.

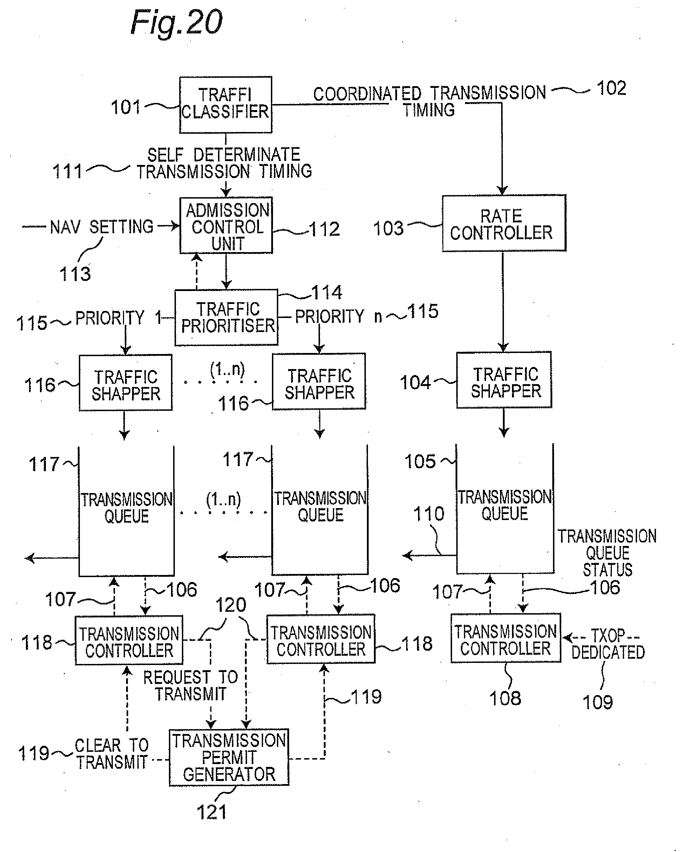

In order to rapidly adapt to the transmission conditions of a wireless medium, Quality of Service (QoS) support should be enabled at the lowest possible layer of the 7-layer OSI reference model.. Fig. 20 shows a systematic process to facilitate QoS for transmission over a wireless network. Initially the traffic stream needs to be classified according to the manner in which it needs to be served, as marked by literal 101. The time at which data transfer is initiated can either being coordinated by a centralized coordinating entity or determined by an autonomous means. Parameterised or prioritised QoS streams can be served by either: coordinated transfer, or autonomous transfer, depending on the choice of the network device or setup.

For traffic streams that are to be served in the coordinated manner, the emission of traffic is to be rate controlled (103) and shaped (104) individually, before being admitted to the transmission queue. By doing so, data units can be transmitted in First-In-First-Out (FIFO)manner without introducing a bias towards any traffic stream. Furthermore, it facilitates data transmission without the need for making a decision on the data unit to be transmitted when a transmission permit is granted. This process is especially useful when the transmission permit is dedicated to a network device, without specifically indicating any traffic stream. The Traffic Shaper shapes the quantity (measured in terms of either: a) the number, or b) the size) of data units that are permitted to be admitted to the corresponding transmission queue. The first process for Traffic Shaping (104) is to determine a service interval for each transmission queue. The service interval is defined as the duration between successive dedications of transmission-permits that is required by a transmission queue in order to achieve QoS requirements for all admitted streams. In order to compute the service interval, first determine the quantity of data units, S, that are to be transmitted from the queue within a specific interval, I. Then compute the duration, D, that is required on the transmission medium to fully transmit one data unit considering all the overheads. Then compute the total duration required to transmit all the data units that are to be transmitted during 1, represented as T, where: T = S * D. Using the value T, above, compute the minimum number of transmission permits required, P.. Finally, the result obtained from the division of I by P is the value of the service interval. After determining the service interval, the values of: a) Service_Credit, b) Service_Negative_Credit and c) Service_Count need to be computed.

Service_Credit is defined as the average quantity (measured in terms of number or size) of data units that can be admitted to the transmission queue within a Service Interval. This is computed as the product of the service interval with the sum of the data rates for all admitted traffic streams. Service_Negative_Credit is defined as the surplus quantity of data units that can be admitted to the transmission queue, within a service interval. It is used to smooth the traffic that is generated at burst without introducing excessive queuing delay. The third variable, Service_Count is the accumulated number or size of data units of the traffic stream that are permitted to be transmitted but have not being do so from the beginning of the stream transmission. It is being initialised to zero before any data units is emitted into the transmission queue. At the beginning of each periodicity of service interval, Service_Credit is added onto the existing value of the variable. After each transmission, a unit is being subtracted from the variable.

At the periodicity of service interval, the quantity of data units, N that are permitted to admit into the transmission queue during the current periodic interval is to be determined. If the value of Service_Count at the end of pervious periodic interval is greater than zero, then N is equal to the sum of Service_Count, Service_Credit and Service_Negative_Credit. Else, N is equal to the sum of Service_Count, Service_Credit only. Then this number is used to guard the emission of data units into transmission queue.

Finally, Transmission Controller (108) is to convert transmission permit to control signal (107) for controlling data transmission, which is also generates necessary signals or control frames to release excessive transmission permit base on transmission queue status (106).

For the traffic streams that determine their transmission time autonomously, each stream needs to be admitted by the admission control unit (112). The admission control unit determines whether admission of the stream will require more resources than are available in the network and based on this calculation, it will decide whether to accept or reject the stream. The admission control unit (112) requires two inputs, namely: a) the estimated data rate of the traffic stream, and b) bandwidth available in the medium prior to admitting the stream. The data rate of a traffic stream can be estimated by monitoring the number of data units and their size at the input terminal of the Traffic prioritiser (114). A station can estimate the bandwidth available in the medium by monitoring it own transmission and the setting of its Network Allocation Vector (NAV). Furthermore, the emission rate is to be mould in a form of short burst in order to reduce the occurrences of contending for transmission permits with other streams or stream of other network devices in the same transmission network. For Traffic Shaper marked by literal 116, it is having the same functionality as describe for the traffic shaper marked by literal 104 with a minor modification on the method to determined the required service interval. The service interval is to be determined as a interval of transmission permit dedication that is able to maintain QoS Requirement of all streams in the respective transmission queue. First is to obtain the duration of transmission permitted, E, when given a transmission permit. Then, compute the quantity of data units, F that can be transmitted in duration E. The service interval is the division result of F over the rate that data units are emitted to the transmission queue.

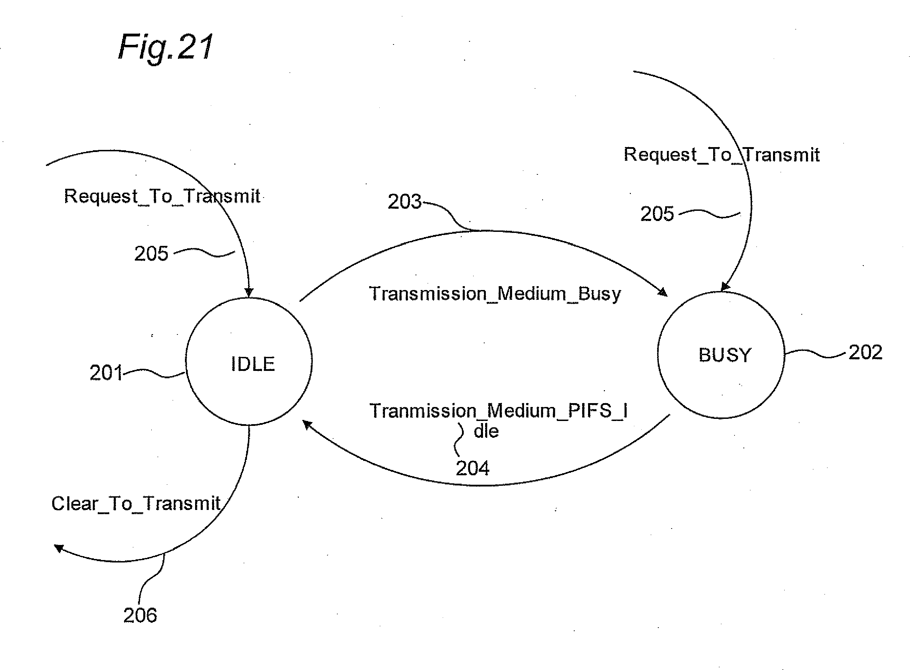

Transmission Controller (118) is to control the transmission of the packet at the transmission queue and generate necessary signal to the Transmission Permit Generator to request for transmission permit. Request_To_Transmit signal (120) is being generated to the Transmission Permit Generator when the respective transmission queue is non-empty and no pending signal request is being generated. Transmit Permit Generator logic can be represented by a two stages Finite State Machine as shown in Fig. 21 with three variables associated with each transmission queue. The first variable, A is to indicate the remaining number of fixed slot that the transmission medium need to remain silent before a transmission permit can be granted to the transmission queue. The second variable, W is to indicate that the transmission queue is having a pending request for transmission permit. It is set to true when Request_To_Transmit signal (205) is being received and set to false when Clear_To_Transmit signal (206) is generated. In the IDLE stage (201), at each slot interval, A is being decremented by 1 if it is non-zero. Furthermore, when A is zero and W indicating there is a pending Request_To_Transmit signal for the respective transmission queue, Clear_To_Transmit signal is to be generated. A transition from IDLE stage to BUSY stage is required when the transmission medium is detected to be busy. In BUSY stage (202), A is stop from decrementing. When the transmission medium is idle for a pre-fix duration, a stage transition from BUSY to IDLE is to be performed. During that transition, A is to be recomputed. With that, only a single Transmission Permit Generator is required to serve more than one transmission queue.

The invention can have the following structures viewed from various aspects. According to the first, a system that enables a network device to facilitate QoS data transmission in which the timing to initiate transmission by the device is coordinated, comprising of:
i) A rate controller to police the emission of traffic stream into the transmission queue such that it does not overuse the dedicated bandwidth and violates the pre-negotiated transmission rate.
ii) A Traffic Shaper to mould the emission rates of all traffic streams into a transmission queue, such that it can be served in First-In-First-Out fashion without introducing bias towards any stream.
iii) A Transmission Controller to generate the necessary signals to control the transmission of a packet at the transmission queue and to release a transmission permit.

According to the second, a system that enables a network device to facilitate QoS data transmission, in which the timing to initiate transmission by the device is determined autonomously by the device, comprising of:
i) An Admission Controller to grant transmission permission to a newly initiated traffic stream such that transmission channel is not overloaded by the admission of the new stream.
ii) A Transmission Controller to generate the necessary signals to request for transmission permits and to control the transmission of the packet at the transmission queue.
iii) A Transmission Permit Generator to generate a transmission permit for a device to initiate transmission.

According to the third, a method to ensure no bias is introduced by combining all the data units of all traffic streams that are to be transmitted in a coordinated manner at the transmission queue, in order to allow data units to be transmitted in a timely and First-In-First-Out fashion, when granted a transmission permit, comprising the steps of:
i) Performing rate control to police the emission rate of a traffic stream into the transmission queue such that it does not violate the pre-negotiated rate.
ii) Performing traffic shaping to mould all the emission rates of the traffic streams into a transmission queue such that it can be served in First-In-First-Out fashion without introducing unfairness to any stream.

According to the fourth, method to achieve traffic shaping in part (ii) of above third aspect comprising the steps of:
i) Determination of a periodicity interval for the operation.
ii) Computation of the average number, or size of the data units that are to be transmitted in duration of the periodic interval in order to satisfy the QoS requirements of the traffic stream.
iii) Compute the variation of the average number, or size of the extra data units that are permitted to be transmitted during the periodic interval duration, in order to satisfy the QoS requirements of the traffic stream that are not generated at a constant bit rate calculated over the periodic interval,
iv) Compute the accumulated number, or size of data units of the traffic stream that have been permitted, but not yet transmitted, from the beginning of the stream transmission. This value is obtained by adding the value as computed in part (ii) at the beginning of each periodic interval, while subtracting a unit for each transmission that is made.
v) Determine the number or size of data units of the traffic stream that are permitted to enter the transmission queue during the current periodic interval. This value is determined at the beginning of each periodic interval by adding the value computed in part (ii) to the value of obtained in part (iv) at the end of previous periodic interval if the value is not greater than zero. Otherwise the values computed in parts (ii) and (iii) are added to the value obtained in part (iv) at the end of previous periodic interval.

According to the fifth, method to determine the periodicity interval in part (i) of fourth aspect, when the transmission permit given to a transmission queue has a constant duration comprises the step of:
i) Compute the number or size of data units can be transmitted in the constant duration.
ii) Compute the duration required for the transmission queue to be filled with the number or size of data units computed in part i.

According to the sixth, method to have only one Traffic Permit Generator for multiple transmission queues is to implement the generator process as two stages finite stage machine that comprises of:
i) A variable associated to a transmission queue indicating the remaining number of fixed slot that the transmission medium need to be remains silent before a transmission permit can be granted to the transmission queue.
ii) A variable associated to a transmission queue indicating that the transmission queue is having a pending request for transmission permit.
iii) An IDLE stage to decrement the variable in part i if it is non-zero at each slot interval and grant transmission permit when a transmission queue is having pending request for transmission permit and the respective variable in part i is zero. A transition from IDLE stage to BUSY stage is performed when granting transmission permit is not allowed.
iv) A BUSY stage that is to stop decrement the variable in part i at each slot interval. A transition from BUSY to IDLE stage is performed when the transmission medium has been IDLE for prefix duration.

According to the seventh, method for of reducing wireless medium occupancy contention where the wireless stations content for transmission bandwidth by dividing into 2 distinct periods of wireless medium occupancy contention, the 2 distinct periods are:
i) Pre-Scheduled medium occupancy period where transmission with contention and transmission without contending is allowable to wireless station that has previously gain medium occupancy period through successful contention in the wireless medium occupancy contention period; and
ii) Medium occupancy contention period where wireless stations can contend for wireless medium occupancy.

According to the eighth, method to bound selective contention period, in seventh aspect, by allowing a central controller of the wireless network where wireless stations perform selective contention by broadcasting a data message with the following parameter:
i) A bit field indicating start and end of the selective contention period;
ii) A numerical representation indicating the time wireless stations can begin contending and reserve for medium occupancy period in current and next selective contention period; and
iii) A numerical representation indicating the durations of the selective contention period.

According to the ninth, method for all stations to generate the selective contention period, as in seventh aspect, within the wireless network controlled or coordinated by a central controller on reception of a signal or message indicating the beginning of the selective contention period and by retrieving the following pre-stored numerical representatives from the message consisting of :
i) A representative indicating the time wireless stations can begin contending and reserve for medium occupancy period in current and next selective contention period; and
ii) A representative indicating the durations of the selective contention period.

According to tenth, method to signal contention based medium occupancy reservation within the wireless network using a numerical represented counter or pointer to indicate the beginning of contention time and duration within a bounded period where the bounded period is described in seventh aspect, to control contention for medium occupancy reservation.

According to eleventh, method to prevent wireless medium contention during a period occupied by wireless medium occupancies belonging to other stations through successful contention based reservations by having a transmission records of a bounded period of time where the transmission records are managed by individual station within the wireless network and the records comprises of:
i) Medium Occupancy Start time of all data streams of the host wireless station;
ii) Medium Duration of all corresponding data streams of the host wireless station;
iii) The start time of a continuous period of wireless medium occupancy of other wireless stations observed by the host wireless station; and
iv) Durations of a continuous period of wireless medium occupancy of other wireless stations observed by the host wireless station.

According to twelfth, a system for reserving bandwidth in a wireless network where medium occupancies ger7erafied by transmitting stations using contention means by allowing transmission records, as in eleventh aspect, to be updated in a distributed manner comprises of medium occupancies periods of data streams to be transmitted by the host station and transmission silence period observed by the host stations due to medium occupancy period allotted to other stations.

According to thirteenth, method to reduce bandwidth wastage due to contention of wireless medium occupancy reservations in the medium occupancy contention period by freeing up the bandwidth for contention comprises the steps of:
i) Appending new blocks of transmission silence period separated only by contention time to form a larger transmission silence period; and
ii) Removing contention time of Medium Occupancy Period between transmission silence periods or another Medium Occupancy Period.

According to fourteenth, method to reserve medium occupancy period for next selective contention period without transmitting bandwidth reservation in subsequent selective contention period by sending medium occupancy reservation parameters in the last data packet in current medium occupancy period where the bandwidth reservation parameters consists of :-
i) Repeat Flag to indicate that the reservation of wireless medium occupancy time as specified in following part (ii) and (iii) to be removed or added in the next bounded period;
ii) A time to indicate the transmission start time measured in reference to the beginning of the bounded period; and
iii) A representative to mark the duration of medium occupancy time as in above part (ii).

According to fifteenth, method to remove reserved medium occupancy time in the pre-scheduled medium occupancy period by not transmitting in the reserved medium occupancy period and allowing the other wireless station to content for transmission by using the updates of transmission records of stations in the wireless network.

According to sixteenth, method to remove reserved medium occupancy in the pre-scheduled medium occupancy period by transmitting a null packet to signal to other stations to content for medium occupancy within the prescheduled medium occupancy time.

According to seventeenth, a system allowing other stations in the wireless network to content for medium occupancy time released by the station by performing individual station transmission record updates from the received null packet from the station releasing medium occupancy.

According to eighteenth, method to mould the emission of data units in a short burst in order to reduce the occurrences of collision with other streams or streams from other network devices in a same network that transmission are not being coordinated by a coordinator comprises the steps of:
i) Performing traffic shaping for the data emission to transmission queue; and
ii) Requesting Transmission Controller to generate a signal to request for transmission permit.

According to nineteenth, method to determine the timing for the Transmission Controller of part iii in second aspect or of part ii in eighteenth aspect to generate a signal to request for transmission permit which is less likely to collide with other transmission comprises by monitoring the status of transmission queue such that the signal to request for transmission permit is only generated if there are enough data units to be transmitted upon receiving transmission permit with the condition that the delay of the signal generation does not cost the lifetime of any data units to be expired.

According to twentieth, method for the stations to content for medium occupancy medium within the bounds of a selective contention period, as mentioned in seventh aspect, using a distributed and self regulated control states where the controls states comprises of :
i) Beginning of Selective Contention period state where the central controller send a message comprises of parameters illustrated in eighth aspect and the other stations wait for the successful reception of the said message;
ii) Pre-Allotted Station Contention state where stations with prior successful contentions in preceding selective contention period contend are allowed to content at specific time based on transmission record, as in eleventh aspect, for wireless medium occupancy time;
iii) Contention Reservations state is a state where stations can contend and reserve for medium occupancy in current and next selective contention period respectively. Stations participating in the selective contention period will also update the contention schedule for medium occupancy time of successful medium occupancy time period executed by other stations in this state;
iv) Stations with a successful contention will be in the contention access rights granted state where data packets of a data stream are transmitted;
v) Stations may traversed through the Advance Contention Avoidance Active state, within the state described in above part (iv) if said transmitting station choose to reserve medium occupancy in the next selective contention period; and
vi) After transmitting all data packets reserved for the medium occupancy time in the successful contention as in above part (iv), the transmission record of the station is updated in the Update Transmission Silence Period Active state.

Although the present invention has been described in connection with the preferred embodiments thereof with reference to the accompanying drawings, it is to be noted that various changes and modifications are apparent to those skilled in the art. Such changes and modifications are to be understood as included within the scope of the present invention as defined by the appended claims, unless they depart therefrom.

### With the features of embodiments:

Embodimen₁. Method for transmitting data stream via wireless medium for contention based medium access across a wireless network having a plurality of stations and an access point communicating to said stations via wireless medium, the method comprising:
(i) performing a contention between the stations for wireless medium occupancy for a station to transmit data stream at a selective contention period;
(ii) transmitting data stream from the contention successful station after the contention,
wherein the selective contention period is divided into two distinct period as:
(a) contention medium occupancy period at which the stations contend for wireless medium occupancy for a station to transmit data stream; and
(b) prescheduled medium occupancy period at which a wireless medium occupancy reservation for a contention successful station is prescheduled.

Embodiment 2. Method for transmitting data stream via wireless medium for contention based medium access across a wireless network having a plurality of stations and an access point communicating to said stations via wireless medium, the method comprising:
(i) transmitting data stream from the station according to prescheduled wireless medium occupancy reservation for the station within prescheduled medium occupancy period of a selective contention period;
(ii) performing a contention between the stations for wireless medium occupancy for a contention successful station to transmit data stream within only contention medium occupancy period of the contention selective period;
(iii) transmitting data stream from the contention successful station after the contention; and
(iv) prescheduling a wireless medium occupancy reservation for the contention successful station to transmit within a prescheduled medium occupancy period of next selective contention period.

Embodiment 3. Method with the features of embodiment 1 or 2, wherein the access point transmit a beacon signal including an information about start period of the contention medium occupancy period to each station, whereby selective contention between the stations is performed.

Embodiment 4. Method with the features of embodiment 3 wherein the beacon signal, the prescheduled medium occupancy period, and the contention medium occupancy period are provided in turn in the selective contention period.

Embodiment 5. Method with the features of embodiment 1 to 4,
when a station is successful for a contention at the contention medium occupancy period of the selective contention period, a wireless medium occupancy reservation having a duration period for the contention successful station is prescheduled within a prescheduled medium occupancy period of next selective contention period, then start period of a contention medium occupancy period of next selective contention period is moved forward from the start period of the contention medium occupancy period of the selective contention period by the duration period.

Embodiment 6. Method with the features of embodiment 1 to 4,
when a first station is successful for a first contention at the contention medium occupancy period of the selective contention period, subsequently a second station is successful for a second contention after the first contention,
a first medium occupancy reservation having a first duration period for the first station is prescheduled within a prescheduled medium occupancy period of next selective contention period, subsequently a second medium occupancy reservation having a second duration period for the second station is prescheduled after the first medium occupancy reservation within the prescheduled medium occupancy period of next selective contention period,
then start period of a contention medium occupancy period of next selective contention period is moved forward from the start period of the contention medium occupancy period of the selective contention period by sum of the first duration period and the second duration period.

Embodiment 7. Method with the features of embodiment 6, wherein the start period and the duration period of transmissions from the first and second stations according to the scheduled wireless medium occupancy reservation are recorded in both the first and the second stations.

Embodiment 8. Method with the features of embodiment 1 to 7, wherein the station monitors condition of the wireless medium occupancy in the selective contention period, and records the condition, then transmission timing is determined according to the condition of the wireless medium occupancy recorded.

Embodiment 9. Method with the features of embodiment 1 to 8,
when the access point receives null packet transmitted at the transmission timing according to prescheduled wireless medium occupancy reservation having a duration period for the station, the prescheduled wireless medium occupancy reservation will be cancelled, then start period of the contention medium occupancy period of next selective contention period will be moved back by the duration period.

Embodiment 10. Method with the features of embodiment 3 to 9, wherein the beacon signal further includes information with respect to:
(i) start period and end period of selective contention period having the contention medium occupancy period and the prescheduled medium occupancy period of the selective contention period; and
(ii) duration period of the selective contention period.

Embodiment 11. Method with the features of embodiment 10, wherein the beacon signal further includes information with respect to start period and duration period of prescheduled wireless medium occupancy reservation within the prescheduled medium occupancy period.

Embodiment 12. Method with the features of embodiment 1 to 11, wherein the station transmits data stream having last packet including reservation parameter for wireless medium occupancy reservation having a duration period in prescheduled medium occupancy period of next selective contention period,
the access point receives the reservation parameter included in last packet, wireless medium occupancy reservation for the station will be prescheduled in prescheduled medium occupancy period of next selective contention period, then the start period of the contention medium occupancy period will be moved forward by the duration period.

Embodiment 13. A wireless network system comprising a plurality of stations and an access point communicating with the stations via wireless medium,
the access point comprising:
a medium recorder unit which records:
   (i) start and end period of contention medium occupancy period in which stations contend for wireless medium occupancy for a station to transmit data stream, wherein the contention medium occupancy period is included in a selective contention period; and
   (ii) start and end period of prescheduled medium occupancy period in which wireless medium occupancy is prescheduled, and transmission is performed according to the prescheduled wireless medium occupancy, wherein the prescheduled medium occupancy period is included in the selective contention period;
a controller unit which preschedules wireless medium occupancy reservation having a duration period for contention successful station in prescheduled medium occupancy period, and moves forward the start period of contention medium occupancy period of next selective contention period by the duration period;
a transmitter unit which transmits a beacon signal including information for start period of the contention medium occupancy period to the stations; and
a receiver unit which receives data stream transmitted from the station,
at least one station comprising:
a receiver unit which receives the beacon signal including information of the start period of the contention medium occupancy period transmitted from the access point via the wireless medium;
a transmitter unit which transmits data stream via the wireless medium;
a medium recorder unit which records transmission record; and
a controller unit which extracts the information of the start period of the contention medium occupancy period from the beacon signal, and monitors condition of wireless medium occupancy at every monitoring period among the start period and the end period of the contention medium occupancy period, then instructs the transmitter to transmit data stream when the controller unit confirms that wireless medium is not occupied.

Embodiment 14. An access point communicating with a plurality of stations via wireless medium, the access point comprising:
a medium recorder unit which records:
   (i) start and end period of contention medium occupancy period in which stations contend for wireless medium occupancy for a station to transmit data stream, wherein the contention medium occupancy period is included in a selective contention period; and
   (ii) start and end period of prescheduled medium occupancy period in which wireless medium occupancy is prescheduled, and transmission is performed according to the prescheduled wireless medium occupancy, wherein the prescheduled medium occupancy period is included in the selective contention period;
a controller unit which preschedules wireless medium occupancy reservation having a duration period for contention successful station in prescheduled medium occupancy period, and moves forward the start period of contention medium occupancy period of next selective contention period by the duration period;
a transmitter unit which transmits a beacon signal including information for start period of the contention medium occupancy period to the stations; and
a receiver unit which receives data stream transmitted from the station.

Embodiment 15. An access point with the features of embodiment 14,
when the receiver unit receives a null packet transmitted at the transmission timing according to prescheduled wireless medium occupancy reservation having a duration period for the station, the prescheduled wireless medium occupancy reservation will be cancelled, then start period of the contention medium occupancy period of next selective contention period will be moved back by the duration period.

Embodiment 16. A station communicating with an access point via wireless medium, the station comprising:
a receiver unit which receives a beacon signal including information of start period of contention medium occupancy period transmitted from the access point via the wireless medium, wherein in the contention medium occupancy period the station contends with other station for wireless medium occupancy to transmit data stream;
a transmitter unit which transmits data stream via the wireless medium;
a medium recorder unit which records transmission record; and
a controller unit which extracts the information of the start period of the contention medium occupancy period from the beacon signal, and monitors condition of wireless medium occupancy at every monitoring period among the start period and the end period of the contention medium occupancy period, then instructs the transmitter to transmit data stream when the controller unit confirms that wireless medium is not occupied.

Embodiment 17. A station with the features of embodiment 16,
when the station is successful for a contention at the contention medium occupancy period of the selective contention period, and acquires a wireless medium occupancy reservation having a duration period for the contention successful station, then the station extracts information of start period of the contention medium occupancy period of next selective contention period, and begins to transmit data stream at a time before the start period of the contention medium occupancy period by the duration period.

Embodiment 18. A station with the features of embodiment 16 or 17, wherein the medium recorder unit records the medium record including condition of wireless medium occupancy in both the contention medium occupancy period and the prescheduled medium occupancy period of the selective contention period,
wherein the controller unit calculates transmission timing at which the station transmits data stream in the prescheduled medium occupancy period according to the transmission record.

Embodiment 19. A station with the features of embodiment 16,
when first and second stations are prescheduled respectively within the next prescheduled medium occupancy period, and the first station's transmitter unit transmits a null packet which is a kind of broadcasting packet sent to all stations in order to release its own prescheduled wireless medium occupancy, and the second station's receiver unit receives the null packet from the first station, then the controller unit of the second station realizes that the prescheduled wireless medium occupancy reservation for the first station is cancelled, and rearranges its transmission order of the second station within the next prescheduled medium occupancy period by using the medium record recorded by the medium recorder unit of the second station.

## Claims

1. Communicating method performed by a station included in a system having a plurality of stations and an access point, wherein the access point periodically transmits beacon frame to the stations, wherein a period between two beacon frames is defined as a beacon period, wherein the beacon period includes a medium occupancy period which is allocated to one station and a contention period at which the plurality of stations communicate in competition with other stations, the method comprising:
recording schedule information of the contention period and the medium occupancy period included in a beacon period;
detecting change of the schedule information; and
when the change of the schedule information is not detected, communicating according to the schedule information recorded in the station during the next beacon period.

2. The method according to claim 1, wherein the schedule information includes address of the station to which the medium occupancy period is allocated, information for duration period of the medium occupancy period of each station, and information having start time and duration period of the contention period.

3. The method according to claim 1, wherein the change of the schedule information is detected according to frames received from other stations.

4. The method according to claim 1, wherein the change of the schedule information is detected according to information included in the beacon frames.

5. A station included in a system having an access point and a plurality of stations, wherein the access point periodically transmits beacon frames to the stations, wherein a period between two beacon frames is defined as a beacon period, wherein the beacon period includes a medium occupancy period which is allocated to one station and a contention period at which the plurality of stations communicate in competition with other stations, the station comprising:
a recording unit operable to record schedule information of the contention period and the medium occupancy period included in a beacon period;
a control unit operable to detect change of the schedule information, and when the change of the schedule information is not detected, the control unit communicates according to the schedule information recorded in the station during the next beacon period.

6. The station according to claim 5, wherein the schedule information includes address of the station to which the medium occupancy period is allocated, information for duration period of the medium occupancy period of each station, and information having start time and duration period of the contention period.

7. The station according to claim 5, wherein the control unit detects change of the schedule information according to frames received from other stations.

8. The station according to claim 5, wherein the control unit detects change of the schedule information according to information included in the beacon frames.
